# EUROPÄISCHE PATENTSCHRIFT

(11) **EP 3 712 368 B1**
(45) Veröffentlichungstag und Bekanntmachung des Hinweises auf die Patenterteilung: **12.01.2022**
(21) Anmeldenummer: 20164024.0
(22) Anmeldetag: 18.03.2020
(51) Int. Cl.: E06B 3/30, E06B 3/96

(54) **RAHMENPROFIL EINES BLEND- UND/ODER FLÜGELRAHMENS, SOWIE VERFAHREN ZU DESSEN HERSTELLUNG**
FRAME PROFILE OF A BLIND AND / OR WING FRAME AND METHOD FOR ITS PRODUCTION
PROFILÉ DE CADRE D'UN BÂTI DORMANT ET/OU DE CADRE DE BATTANT AINSI QUE SON PROCÉDÉ DE FABRICATION

(30) Priorität: 18.03.2019 DE 102019106876
(43) Veröffentlichungstag der Anmeldung: 23.09.2020
(73) Patentinhaber: Veka AG, 48324 Sendenhorst (DE)
(72) Erfinder: Kalverkamp, Philipp, 48324 Sendenhorst (DE)
(74) Vertreter: Cohausz Hannig Borkowski Wißgott

(56) Entgegenhaltungen:
- EP-A1- 0 425 753
- EP-A2- 2 594 720
- WO-A1-00/75472
- WO-A1-2017/047906
- DE-A1- 3 032 939
- DE-U1-202015 103 240

## Beschreibung

Die Erfindung betrifft ein Rahmenprofil eines Blend- und/oder Flügelrahmens eines Fensters oder einer Tür umfassend ein Kernprofil aus Kunststoff, wobei an wenigstens einer, bevorzugt an beiden der sich gegenüberliegenden Außenwände des Kernprofils eine Mantelschale angeordnet ist. Die Erfindung betrifft weiterhin ein Verfahren zur Herstellung eines solchen Rahmenprofils.

Als Außenwände des Kernprofils werden diejenigen Wände verstanden, die bei der späteren Verwendung des Rahmenprofils, z.B. wenn aus diesen ein Rahmen oder insgesamt ein Fenster oder eine Tür gebildet ist, zum Rauminneren und zur äußeren Umwelt eines Gebäudes weisen, in welches das Rahmenprofil eingebaut ist. Diese Außenwände liegen somit an der Gebäudeinnenseite und an der Gebäudeaußenseite des Rahmenprofils und liegen sich weiterhin in einer Richtung gegenüber, die parallel ist zur Flächennormalen der Ebene eines aus den Rahmenprofilen gebildeten Rahmens, bzw. einer dadurch eingefassten Glasscheibe. Die Richtung der Beabstandung der Außenwände wird auch als Richtung der Breite oder Tiefe des Rahmenprofils verstanden. Die Richtung der Höhe ist senkrecht zur Breite / Tiefe und zu der Längserstreckung des Kernprofils. Das Kernprofil ist ein extrudiertes Kunststoffprofil, üblicherweise mit Hohlkammern und weist somit an jeder Stelle seiner Erstreckung denselben Querschnitt auf. Das Kernprofil kann hinsichtlich des Materials z.B. aus PVC-Hart ausgebildet sein.

Türen und Fenster aus Kunststoff, z.B. PVC sind fester Bestandteil einer modernen Bauweise. Das Trägerelement Kunststoff bietet neben den geringen Anschaffungskosten, einen hohen Schall- und Wärmeschutz, eine einfache Reinigung und eine hohe Langlebigkeit. Kunststofffenster zeichnen sich speziell in der Rahmenherstellung durch eine automatisierte Eckschweißverbindungstechnik aus, die zu fugenfreien und dichten Verbindungen führt. Metallfenster, insbesondere Aluminiumfenster überzeugen durch sehr hohe Stabilität, Langlebigkeit und Witterungsbeständigkeit. Die Verkleidung von Kunststoffprofilen mit Mantelschalen, vornehmlich aus Aluminium, erfolgt vielfach aus optischen Gründen, wobei Mantelschalen aus Aluminium in unterschiedlichen Farben eloxiert, lackiert, pulverbeschichtet oder foliert werden können. Aus der EP 2 594 720 A, der DE-3032939 A1 und der EP 0 425 753 A sind Rahmenprofilen aus einem Kunststoffkernprofil und einem Metallverblendprofil bekannt.

Aus der EP 0 517 057 A2 ist es bekannt, die Blendrahmen und die Flügelrahmen nach dem Eck-Verschweißen der Rahmenprofile zunächst mit knopfförmigen Haltern versehen, auf die anschließend die Aluminium-Mantelschalenaufgeklipst werden. Die Aluminium-Mantelschalen weisen hierzu zwei Paare von ebenfalls hinterschnittenen Befestigungsrippen auf, deren jeweiliger Abstand dem Knopfdurchmesser der Schraubklemmnippel entspricht.

Die Halterungen müssen dabei sehr exakt auf den Rahmenprofilen vom Blendrahmen bzw. Flügelrahmen positioniert werden, zusätzlich sind im Eckbereich spezielle Eckverbinder notwendig. Diese Konstruktion bedingt relativ dicke Aluminium-Mantelschalen, da die Befestigungsrippen und die Schraubklemmnippel zum Aufklipsen eine zusätzliche Schräge benötigen.

Ein weiterer Nachteil des gattungsgemäßen Profilsystems liegt darin, dass Wasser zwischen die Kunststoff-Profile und die Aluminium-Mantelschalen gelangen kann.

Die im Stand der Technik beschriebenen Verblendungen mit Aluminium-Mantelschalen sind nur für eine Nachrüstung bereits fertig zusammengefügter Rahmen geeignet und müssen aufwändig in Handarbeit, nachmontiert werden. Die größte Herausforderung stellen hierbei die Eckverbindungen der Fensterrahmen dar. Kunststoff, z.B. PVC, und Aluminium verhalten sich bei Temperaturschwankungen unterschiedlich und das kann, bedingt durch die verschiedenen Matarialausdehnungen, insbesondere in den Eckbereichen, zu Spaltbildungen führen. Aus diesem Grund werden bei der nachträglichen Verkleidung der Kunststoffprofile mit Metallprofilen als Mantelschalen, die Eckverbindungen auf Stoß gearbeitet.

Die Aufgabe der Erfindung besteht darin, ein als Halbzeug vorgefertigtes stangenförmiges Rahmenprofil mit sichtbaren Außenwänden aus Mantelschalen, bevorzugt aus Metall-Mantelschalen und weiter bevorzugt aus Aluminium-Mantelschalen und einem zwischen diesen Mantelschalen liegenden, somit innenliegenden Kunststoffkernprofil, z.B. einem Kunststoff-Hohlkammerprofil anzubieten. Bevorzugt ist es eine weitere Aufgabe ein stabiles, aber materialoptimiertes Rahmenprofil mit maximalen Kunststoff- und minimalen Materialanteil in den Mantelschalen bereitzustellen, bevorzugt, das in Standardmaßen angeboten werden kann zur Herstellung von standardgemäßen Fenster- oder Türrahmen. Weiter bevorzugt ist es vorgesehen, den Dickenaufbau auf dem Kernprofil durch die Mantelschalen möglichst gering zu halten und weiter bevorzugt auch durch die Mantelschalen zur statischen Tragfähigkeit des Rahmenprofils bzw. daraus gebildeter Rahmen beizutragen.

Weiter bevorzugt ist es eine Aufgabe die Vorzüge eines Kunststofffensters, mit denen eines verschalten Fensters oder eines Aluminiumfensters zu verbinden.

Es ist eine weitere bevorzugte Aufgabe Rahmenprofile mit Mantelschalen bereitzustellen, aus denen effizient, maschinell und zeitsparend in einem Arbeitsprozess - insbesondere bei der Eckverbindung - fertige Flügelrahmen oder Blendrahmen für Fenster oder Türen hergestellt werden können. Darüber hinaus soll ein automatisiertes Verfahren angeboten werden, das eine Eckverbindung zur Vermeidung von Spalten in den Eckbereichen von mit Mantelschalen versehenen Kunststoffprofilen unter größtmöglicher Stabilität gewährleistet.

Erfindungsgemäß wird die Aufgabe durch ein Rahmenprofil gemäß Anspruch 1 gelöst.

Verfahrensgemäß kann ein solches Rahmenprofil durch ein Verfahren gemäß Anspruch 9 hergestellt werden.

Die bevorzugte Ausführung ist es, dass ein jeweiliges Rahmenprofil auf beiden Außenwänden jeweils wenigstens eine Befestigungsnut aufweist an / in der jeweils eine Mantelschale befestigt ist. Hierdurch ist das Rahmenprofil innenseitig und außenseitig mit Mantelschalen verblendet.

Der Vorteil solcher Rahmenprofile und des Herstellungsverfahrens ist es, dass die wenigstens eine Befestigungsnut, wenn sie sich über die gesamte Profillänge des Kernprofils erstreckt, direkt bei der Extrusion des Kernprofils hergestellt werden kann. Eine Befestigung einer Mantelschale erfolgt erfindungsgemäß an oder in der Befestigungsnut, so dass Befestigungsmittel im Bereich der Nutausnehmung angeordnet werden können und somit nicht zu einem Dickenaufbau beitragen. Ein mit Mantelschalen gemäß der Erfindung versehenes Kernprofil kann somit ein kombiniertes erfindungsgemäßes Rahmenprofil ausbilden, dass mit einer geringere Dicke ausgebildet werden kann bzw. dass bei einer vorgegebenen Dicke, z.B. gemäß eines Standards eine im Vergleich zum Stand der Technik geringeren Dickenanteil durch die Mantelschale aufweist.

Weiterhin weist eine Außenwand mit einer Befestigungsnut zumindest bereichsweise eine U-Profilierung auf, welche die Nutausnehmung umgibt, und die gegenüber einer I-förmigen Wand eine größere statische Tragfähigkeit bzw. höhere Verwindungssteifigkeit aufweist.

Weiterhin kann die Befestigungsnut mit dem von den Nutwänden und dem Nutboden der Befestigungsnut umschlossenen Raum, der von der Mantelschale überdeckt ist, einen Aufnahmeraum ausbilden, bei dem in einem üblichen Schweißprozess zur Eckverschweißung von Kunststoffprofilen aufgeschmolzenes Kunststoffmaterial verpresst werden kann.

Bevorzugt sieht die Erfindung vor, dass mit einer Mantelschale eine Außenwand des Kernprofils vollständig überdeckt wird. Darunter wird bevorzugt verstanden, dass alle die Teile der Außenwand von der Mantelschale überdeckt sind, die ansonsten von außen betrachtet sichtbar wären. Somit bildet in dieser bevorzugten Ausführung eine Mantelschale vollständig die nach außen erscheinenden Sichtfläche des erfindungsgemäßen Rahmenprofils. Ein hergestellter Rahmen kann somit vollständig die von der Mantelschale definierte Optik annehmen. Die Optik kann dabei unmittelbar durch das Material der Mantelschale und ggfs. durch dessen Oberflächenstrukturierung gegeben sein. Eine Mantelschale kann aber auch ihrerseits eine Beschichtung aufweisen, insbesondere zumindest auf der nach außen weisenden Sichtfläche. Die Optik kann dann im Wesentlichen durch die Beschichtung definiert sein.

Durch die Ausbildung einer Befestigungsnut in der Außenwand wird die Außenwand bevorzugt in zwei Ebenen unterteilt, nämlich dadurch, dass der Nutboden ein Teil der Außenwand ist, der hinter die erste Ebene der am weitesten nach außen vorragenden Außenwandbereiche, die in der Höhenrichtung erstreckt an die Enden der Nutwände anschließen, in die Richtung zum Kernprofil-Inneren zurückversetzt ist. Dabei liegt der zurückversetzte Nutboden in der zweiten Ebene. Erste und zweite Ebene sind bevorzugt parallel zueinander.

Die Erfindung kann vorsehen, dass eine jeweilige Mantelschale mit ihrer zum Kernprofil weisenden Innenfläche direkt auf den nach außen vorragenden Au-ßenwandbereichen, also denen der ersten Ebene kontaktierend aufliegt. Da, wie oben erwähnt die Befestigungselemente an der Innenfläche der Mantelschalen in die Nut eingreifen, kann besonders bevorzugt so die Aufbaudicke durch eine Mantelschale auf dem Kernprofil auf die Wanddicke der Mantelschale beschränkt werden.

Die nach außen am weitesten vorragenden Außenwandbereiche der Außenwand liegen bevorzugt an den oberen und unteren Kantenbereichen eines Kernprofils. Bevorzugt sind sodann die Befestigungselemente, vorzugsweise alle zur Befestigung an/in der Befestigungsnut vorgesehenen Befestigungselemente, bezogen auf die Gesamthöhe einer Mantelschale in oder um die längserstreckte Mittenlinie der Mantelschale angeordnet, vorzugsweise mit einem Abstand zu den oberen und unteren Kantenbereichen, so dass die Innenfläche der Mantelschale auf die Wandstärke beschränkte Kantenbereiche ausbilden kann, die in direkten Kontakt zu den vorragenden Außenwandbereichen kommen können.

Ein Rahmenprofil der Erfindung ist somit eine Kombination aus extrudierten Kunststoffkernprofil und Mantelschalen, mit denen die sichtbaren Flächen der Kunststoffhohlkammerprofile verblendet werden. Die Mantelschalen können aus einem beliebigen Material gewählt sein, das für die benötigte Anwendung gewählt ist. Z.B. können die Mantelschalen aus Holz ausgebildet sein, um einem Kunststofffenster das Aussehen eines Holzfensters zu verleihen. Bevorzugt sind die Mantelschalen in diesen Fall aus Holz gefräst.

Ebenso und bevorzugt können die Mantelschalen aus Metall, bevorzugt einem Leichtmetall und besonders bevorzugt aus Aluminium, z.B. durch Strangpressen, gefertigt sein. Hierdurch wird ein besonders guter Wetterschutz erzielt.

Bei der hergestellten Kombination der erfindungsgemäßen Rahmenprofile liegen die Kernprofile, bevorzugt Hohlkammerprofile der Benennung entsprechend im Kern der Profilkombination und die Mantelschalen sind außen daran befestigt. Wesentlicher Vorteil ist es, dass die Mantelschalen nicht nach dem Einbau des Fensters oder der Tür auf die Kernprofile / Kunststoffhohlkammerprofile aufgebracht werden, sondern bereits fester Bestandteil, insbesondere nicht zerstörungsfrei lösbarer Bestandteil der Rahmenprofile sind, bevor die Rahmenprofile auf ein Endmaß abgelängt werden, insbesondere auch bevor die Rahmenprofile eck-verschweißt werden.

Der Kunststoff-Kern, der insbesondere aus PVC, vorzugsweise aus PVC-hart, hergestellt ist, dient der thermischen Trennung und bildet einen Funktionsbereich, welcher der Schallminderung und der Wärmedämmung dient. Er ist bevorzugt vollständig innenliegend, das heißt er ist weder von der Gebäudeau-βen- noch von der Gebäudeinnenseite sichtbar.

Bevorzugt reichen dafür die Mantelschalen bis an oder über die Befestigungsbereiche des Kernprofils, in welchen die Dichtungen zu den Glasscheiben oder Dichtungen zum benachbarten Profil aufgenommen sind. Die Mantelschale eines Flügelrahmenprofils überdeckt somit, bevorzugt innen und au-βenseitig, alle Kernprofilbereiche vom Bereich der Dichtung zum Blendrahmenprofil bis zum Bereich der Dichtung zur Glasscheibe. Die Mantelschale eines Blendrahmenprofils überdeckt, bevorzugt innenseitig und außenseitig, alle Kernprofilbereiche vom Bereich der Dichtung zum Flügelrahmenprofil bis zur Immobilienwand / Mauerwerk / Ständerwerk.

Weiter bevorzugt können die Mantelschalen, bevorzugt außenseitige Mantelschalen an zu den Scheiben weisenden Kanten des Mantelschalenprofils die Dichtungen kontaktieren, die in Dichtungsaufnahmen, insbesondere Nuten am Kernprofil/Kunststoffhohlkammerprofil angebracht sind.

Weiter kann bevorzugt, insbesondere rauminnenseitig, eine Glasleiste des einen Flügelrahmen bildenden Rahmenprofils aus dem Material der Mantelschale ausgebildet sein, so dass sich eine durchgängig gleichbleibende Optik bis zum Glaseinsatz ergibt. Bevorzugt ist weiterhin die Außenfläche der Glasleiste mit der Außenfläche der Mantelschale fluchtend, insbesondere abstandslos fluchtend ausgerichtet.

Eine weiterhin bevorzugte Ausführung kann es vorsehen, dass die Mantelschale am Kernprofil des Blendrahmens und die Mantelschale am Kernprofil des Flügelrahmens, die auf derselben Seite, insbesondere Innenseite und/oder Außenseite, der Profile angeordnet sind, mit ihren Sichtflächen fluchtend, insbesondere in derselben Ebene angeordnet sind. Eine andere Ausführung kann vorsehen, dass die Sichtflächen dieser beiden Mantelschalen versetzt zueinander sind. Es kann auch vorgesehen sein, die auf einer der beiden Seiten die beiden mantelschalen fluchtend und auf der anderen Seite der Profile versetzt anzuordnen.

All diese Ausführungsmöglichkeiten erzielen bevorzugt, dass bei Ansicht von außen oder innen das Erscheinungsbild durch die Optik der Mantelschalen dominiert, wenn nicht gar insgesamt vorgegeben wird.

Blend- und Flügelrahmen aus erfindungsgemäßen Rahmenprofilen sind an allen vier Profilseiten im Kern aus dem innenliegenden Kernprofil, bevorzugt einem Kunststoffhohlkammerprofil als Trägermaterial gebildet und an den Sichtflächen, welche der späteren Außenseite und der Rauminnenseite zugewandt sind mit Mantelschalen verblendet. In bevorzugter Ausführung können somit auch kostengünstige, recycelte Kunststoffmaterialien zur Anwendung kommen, insbesondere selbst dann, wenn dieser Kunststoff eine unansehnliche Optik hat.

Bevorzugt bilden Aluminium-Mantelschalen zumindest an der Gebäudeau-βenseite die wasserführende Ebene und können den witterungsdingten Einflüssen wie Wind und Wasser standhalten.

Die Form des Kernprofils der Rahmenprofile zeichnet sich sowohl für den Flügel- als auch für den Blendrahmen dadurch aus, dass die senkrecht bzw. vertikal verlaufenden Außenwände bereichsweise, nämlich im Bereich der Befestigungsnut nach innen verlegt sind, in besonders bevorzugter Ausführung hierdurch aber gegenüber üblichen Konstruktionen keine Schwächung der Tragfähigkeit oder Steifigkeit einhergeht, insbesondere sogar durch die U-Profilierung der Außenwand gegenüber einer I-Profilierung eine höhere Steifigkeit erzielt wird.

Die Erfindung kann bevorzugt vorsehen, dass der Nutboden der Befestigungsnut durch einen in Höhenrichtung verlaufenden Steg des Kernprofils, insbesondere eines das Kernprofil bildenden Hohlkammerprofils gebildet ist, der das Kernprofil nach außen begrenzt. Insbesondere grenzt der Steg zumindest bereichsweise eine Hohlkammer des Kernprofils nach außen ab. Die Höhenrichtung wird dabei vorzugsweise senkrecht zur Längserstreckungsrichtung bzw. der Extrusionsrichtung eines Kernprofils und parallel zur Ebene betrachtet in welcher der Rahmen bzw. das Glas liegt.

Dieser den Nutboden bildende Steg ist in besonders bevorzugter Ausführung ein überwiegend zur statischen Tragfähigkeit des Profils beitragender Steg. Dafür kann z.B. dieser Steg mit der größten Dicke aller Stege des Kernprofils ausgebildet sein, insbesondere was nicht ausschließt, dass es noch andere Stege des Kernprofils mit derselben maximalen Dicke gibt.

Durch das "Zurücksetzen" der Sichtfläche des PVC-Profils, insbesondere eines in der optik / Konstruktion ansonsten herkömmlichen PVC-Profils, wandert der vormals dickste Steg als Nutboden ins Kernprofil und weist hier die erforderliche Dicke auf, die genug Material bietet, um beim Eckverschweißen eine belastbare Schweißverbindung zu erzeugen.

Die Erfindung kann auch weiterhin vorsehen, dass der Nutboden der wenigstens einen Befestigungsnut, bzw. der diesen bildende Steg eine Höhe aufweist, die mindestens 50%, bevorzugt mindestens 70 % der Gesamthöhe der Außenwand des Kernprofils beträgt, in welcher die Befestigungsnut vorgesehen ist. Sofern auf einer Außenwand mehr als nur eine Befestigungsnut vorgesehen ist trifft vorzugsweise diese Beschränkung auf die Summe der Höhen der Befestigungsnute zu.

Nach dem Extrusionsprozess des Kernprofils, bevorzugt des Kunststoffhohlkammerprofils, das den inneren Kern des Flügel- als auch des Blendrahmens bildet, wird dieses um seine eigentlichen später sichtbaren Außenflächen, welche durch die Mantelschalen gebildet werden, ergänzt. Diese Ummantelung wird auf zumindest einer der Sichtflächen der Kernprofile und vorzugsweise auf den gebäudeaußenseitigen und gebäudeinnenseitigen Sichtflächen der Kernprofile durchgeführt. Kernprofile für Flügelrahmen und Blendrahmen sind bevorzugt im Querschnitt unterschiedlich ausgeführt, weisen jedoch jeweils in den Außenwänden die wenigstens eine, bevorzugt die genau eine Befestigungsnut auf.

Die Verbindung der Mantelschalen mit den Kernprofilen kann auf verschiedene Arten erfolgen.

Erfindungsgemäß weist eine Mantelschale, insbesondere eine als Strangpressprofil ausgebildete Mantelschale aus Metall, vorzugsweise Aluminium, für die Befestigung am Kernprofil auf Ihrer zum Kernprofil weisenden Innenfläche wenigstens ein zum Kernprofil ragendes Befestigungselement auf, mit dem die Mantelschale an und/oder in der Befestigungsnut befestigbar ist. Bevorzugt liegt ein solches Befestigungselement bei jeder Art der Befestigungsmöglichkeit in der von der Befestigungsnut gebildeten und von der Mantelschale überdeckten Ausnehmung.

Ein solches Befestigungselement, kann bevorzugt, z.B. bei einem Strangpressprofil, über die gesamte Länge der Mantelschale ausgebildet sein. Das Befestigungselement kann einen von der Mantelschale in Richtung zum Nutboden vorspringenden Steg umfassen, insbesondere der ein funktionales Kopfstück umfasst. Die Befestigung kann mittels des Kopfstückes, des Steges oder beiden erfolgen. Der Steg kann zur Mantelschalensichtfläche und/oder zum Nutboden senkrecht (unter 90 Grad) verlaufen, aber auch in anderen geneigten Winkelanordnungen, insbesondere also von 90 Grad abweichen. Ein Befestigungselement ist durch einen Klebefuss, insbesondere durch einen Vorsprung, vorzugsweise als Steg ausgebildeten Vorsprung mit zum Nutboden paralleler Klebefläche zur Aufnahme von Klebstoff, insbesondere in T-Form ausgebildet. Hier kann die Klebefläche das funktionale Kopfstück bilden. So kann zwischen Mantelschale und Kernprofil eine stoffschlüssige Verbindung erstellt werden, insbesondere was weiterhin dazu führt, dass auch die Mantelschale einen statisch tragenden Beitrag zum Gesamtprofil liefert. Die Klebefläche kann in bevorzugter Ausführung auch eine Rastfunktion übernehmen, insbesondere dadurch, dass diese eine Hinterschneidung an der Befestigungsnutwand hintergreift. Für diese Ausführung kann es vorgesehen sein, dass die Mantelschale zwei in Höhenrichtungbeabstandete Klebefüsse aufweist, deren in Höhenrichtung voneinander weigweisenden Kanten einen Abstand haben, der kleiner gleich der Nutbodenhöhe ist und größer gleich dem, insbesondere geringsten Abstand zwischen den Nutwänden am Ort der Hinterschneidung.

Ein Befestigungselement kann auch als Raststeg ausgebildet sein, insbesondere zur rastenden Zusammenwirkung mit einer Hinterschneidung an der Befestigungsnutwand. In diesem Fall kann ein Steg als funktionales Kopfstück einen Rasthaken aufweisen, der in eine Hinterschneidung eingreifen kann. Es kann auch vorgesehen sein, dass der Raststeg mit einer durch Materialverdrängung vom Raststeg, insbesondere dessen Kopfstück, an der Befestigungsnutwand selbst erzeugten Vertiefung zusammenwirkt. Eine solche Vertiefung kann durch eine Kerbwirkung zwischen dem härteren Material des Raststeges am weicheren Material des Kernprofils entstehen.

Ein Befestigungselement kann auch als Positioniersteg ausgeführt sein, insbesondere in Richtung zum Kernprofil sich verjüngender Positioniersteg, mit dem durch Kontaktierung mit der Befestigungsnutwand die Mantelschale zum Kernprofil ausrichtbar ist. Ein solches positionierendes Befestigungselement leistet nicht alleine eine Befestigung, trägt aber zu dieser bei, insbesondere in Kombination mit einer der vorher genannten Ausführungen von Befestigungselementen. Ein solcher Positioniersteg kann ohne zusätzliches funktionales Kopfstück ausgebildet sein, insbesondere da sich dessen Funktion durch die Verjüngung des Steges ergibt.

In einer bevorzugten Ausführung kann ein Befestigungselement als ein Verbindungselement ausgebildet sein, insbesondere ausgebildet sein als ein in Richtung zum Befestigungsnutboden vorspringender Steg, vorzugsweise mit einen endseitigen Kopfstück, insbesondere mit einem keilförmigen oder zumindest gegenüber dem Steg verdickten Kopfstück, welches zumindest bereichsweise an einen Verbindungspartner kontaktierend anlegbar und/oder in einen Verbindungspartner einbettbar ist, der an der Befestigungsnutwand befestigt, vorzugsweise daran anextrudiert ist. Ein solcher Verbindungspartner kann vorzugsweise aus einem im Vergleich zum Material des Kernprofils (z.B. PVC-hart) und/oder der Mantelschale weicheren Material ausgebildet ist, vorzugsweise aus PVC-Weich. PVC- Weich ist ein PVC-Kunststoff mit zusätzlichen Weichmacheranteilen, welche die geringere Härte gegenüber PVC-hart bewirken. Dieser Verbindungspartner kann an zumindest einer der beiden Befestigungsnutwände zum Inneren der Nut weisend befestigt sein, insbesondere den Nutboden kontaktierend oder in einem Abstand zum Nutboden, insbesondere was eine Hinterschneidung ausbilden kann.

Bei der Verbindung zwischen dem Verbindungselement und dem Verbindungspartner ist es vorgesehen, dass das Verbindungselement, insbesondere mit seinem Steg und/oder dem Kopfstück, den Verbindungspartner kontaktiert und/oder in diesen eingebettet wird durch einer vom Verbindungselement im Verbindungspartner erzeugte Materialverdrängung.

Zu einer solchen Verdrängung kann es kommen durch eine Bewegung des Verbindungselementes zumindest bereichsweise in den Verbindungspartner hinein. Dies ist insbesondere deshalb möglich, weil das Verbindungselement vorzugsweise aus dem Material der Mantelschale ausgebildet ist, insbesondere aus Metall, vorzugsweise Aluminium und das Material des Verbindungspartners weicher ist, z.B. PVC-Weich. Insbesondere kann sich in der so erstellten Verbindung der Verbindungspartner durch die Verdrängung bereichsweise an die Form des Verbindungselementes anpassen, insbesondere zumindest am Ort der bestehenden Kontaktierung / Einbettung.

Ein Befestigungselement kann auch als ein Referenzsteg ausgebildet sein, vorzugsweise der die größte Dicke aller Befestigungselemente aufweist, insbesondere der anlegbar ist an einer der beiden Befestigungsnutwände. Es kann vorzugsweise mit einer zum Nutboden weisenden Anlaufschräge oder einem Anlaufbogen ausgebildet sein, insbesonderer was das funktionalen Kopfstück ausbildet Ein solcher der Referenzsteg kann zu einem anderen Befestigungselement, z.B. den vorbenannten Verbindungselement in einem Abstand angeordnet sein.

Die Erfindung kann vorsehen, jeweils mehrere artgleiche und/oder artverschiedene Befestigungselemente, insbesondere von den vorgenannten zu nutzen.

Befestigungselemente, die zur verrastenden Befestigung und/oder zur Positionierung oder zur Verklebung an der Befestigungsnut vorgesehen sind, sind als ein Paar von in Höhenrichtung beabstandeten Befestigungselementen ausgebildet, insbesondere deren Abstand kleiner gleich der Höhe der Befestigungsnut, bzw. kleiner gleich dem Abstand der Nutwände der Befestigungsnut ist. Zwischen einem solchen Paar von Befestigungselementen, die eine nicht klebende Befestigung erzielen, sind ein Paar von Klebefüssen angeordnet.

Erfindungsgemäß wird eine Befestigung jeweils über eine mechanische Verbindung, z.B. Verrastung, Kontaktierung, Einbettung oder zumindest Positionierung und eine zusätzliche Klebeverbindung realisiert. Das Kernprofil weist bei einer Ausführung der Befestigung durch Verrastung bevorzugt Hinterschneidungen an den Nutwänden der Befestigungsnut auf, in die korrespondierende Rastmittel der Mantelschale eingreifen. Bevorzugt sind die Hinterschneidungen an den gegenüberliegenden Nutwänden aufeinander zuweisend. Solche Hinterschneidungen können z.B. direkt im Material der jeweiligen Nutwand ausgeführt sein, z.B. an dem vom Nutboden wegweisenden Ende der Nutwand, wo diese in die nicht zurückgesetzte Außenwand übergeht. Eine Hinterschneidung kann auch mittels eines zur Nutwand separaten Elementes erzielt werden, das als Verbindungspartner mit einem die Hinterschneidung nutzenden Befestigungselement, z.B. einem Rastelement oder kontaktierenden / einbettenden Verbindungselement zusammenwirkt. Ein solcher Verbindungspartner, kann vorzugsweise an der Befestigungsnutwand, insbesondere innen, in die Nut hineinweisend befestigt sein, vorzugsweise mit einem Abstand zur Nutboden, durch den die Hinterschneidung gebildet ist. Ein solcher Verbindungsparnter kann an die Nutwand anextrudiert sein, insbesondere während der Extrusion des Kernprofils, insbesondere durch Co-Extrusion. Der die Hinterschneidung bildende Verbindungspartner kann somit genauso ausgeführt sein, wie der zuvor benannte Verbindungpartner, der durch Kontaktierung und/oder Einbettung mit einem weiteren Verbindungselement als Befestigungselement zusammenwirkt. Insbesondere kann er ebenso aus einem Material ausgebildet sein, dass eine geringere Härte aufweist als das Material des Kernprofils. Z.B. kann er aus PVC-Weich ausgebildet sein.

Bevorzugt verlaufen die Hinterschneidungen des Kernprofils auf der gesamten Länge des Kernprofils und können so direkt bei der Extrusion gefertigt werden, insbesondere unabhängig davon, ob die Hinterschneidung im Material des Kernprofils oder einem weiteren Material realisiert wird.

Die als Rastmittel der Mantelschalen ausgebildeten Befestigungsmittel sind dementsprechend bevorzugt als Rastleisten, Raststege etc. ausgeführt, insbesondere die sich ebenso über die gesamte Länge der Mantelschale erstrecken, bevorzugt sodann auch beim Strangpressen erstellt werden können. Solche Rastleisten / Raststege können Rastnasen / Rasthaken aufweisen, die mit den Hinterschneidungen zusammenwirken.

Ebenso können die Klebflächen der Klebefüße neben ihrer Klebefunktion auch eine Rastfunktion ausüben und, insbesondere mit zumindest einer

Kante der Klebefläche, die zur Befestigungsnutwand weist, eine Hinterschneidung an der Befestigungsnutwand hintergreifen, insbesondere die gemäß der vorgenannten Ausführungen ausgebildet ist. So kann mit einem Klebefuß dieser Art eine klebende und rastende Verbindung hergestellt werden. Insbesondere hat hier die rastende Befestigung eine zumindest temporäre Befestigung und/oder Positionierung zum Ziel. Die Klebende Verbindung erzielt in Verbindung mit einer Verrastung eine schubfest / schubfedersteife Kombination von Kernprofil und Mantelschale.

Alle folgend erklärten Schritte beschreiben eine Durchführung der Herstellung am, insbesondere langen, Stab eines Kunststoffhohlkammerprofils als Kernprofil vor dessen Konfektionierung für den Rahmenbau.

Die Herstellung erfolgt durch Extrudieren eines Kernprofils aus Kunststoff, insbesondere eines Hohlkammerprofils mit wenigstens einer Befestigungsnut in wenigstens einer der beiden sich gegenüberliegenden Außenwände des Kernprofils, bevorzugt in jeder der beiden sich gegenüberliegenden Außenwände des Kernprofils, insbesondere durch welche die Außenwand im Bereich der Befestigungsnut nach innen in das Kernprofil verlegt ist und insbesondere deren Nutboden eine Höhe aufweist, die mindestens 50%, bevorzugt mindestens 70% der Gesamthöhe der Außenwand des Kernprofils (10, 30) beträgt, in einer vorbestimmten Länge, z.B. von 6,5 Metern. Die Herstellung erfolgt weiterhin durch Anfertigen von wenigstens einer, bevorzugt von zwei Mantelschalen, bevorzugt durch Strangpressen von Aluminium, mit Befestigungselementen auf der zum Kernprofil weisenden Innenflächen der Mantelschale, in einer vorbestimmten Länge, insbesondere von 6,5 Metern, und durch Befestigen der wenigstens einen Mantelschale mit seinen Befestigungselementen an/in der Befestigungsnut einer Außenwand des Kernprofils.

Die bevorzugt aus Aluminium ausgebildeten Mantelschalen werden vorzugsweise mittels Rastnasen aufweisenden Befestigungselementen an den Hinterschneidungen am Rahmenprofil (Flügel- und/oder Blendrahmenprofil) zunächst positioniert und fixiert, z.B. so dass ein Formschluss entsteht. Die Rastverbindung erfüllt zwei Funktionen. Zum einen wird die Mantelschale über zwei relativ zueinander beabstandete Rastpunkte / Rastlinien eindeutig in der Höhe positioniert und zum anderen ist der korrekte Abstand in der Tiefe zum Nutboden der Befestigungsnut des Kunststoffhohlkammerprofils gewährleistet. Damit wird gleichzeitig der erforderliche Anpressdruck über die weiterhin genutzten Klebefüße mit dem Klebstoff erzeugt.

Bevorzugt haben die Klebefüsse gegenüber der Mantelschalen-Innenfläche eine Höhe, die geringer ist als die Tiefe der Befestigungsnut, so dass Platz für Klebemittel zwischen Klebefuß und Nutboden verbleibt.

Gleichzeitig pressen sich die Klebefüße, die sich an der Innenfläche der Mantelschalen befinden, in verrasteter Position an den Klebstoff, der nach oder während dem Extrusionsprozess in Klebebahnen über die gesamte Länge auf den Nutboden der Befestigungsnut appliziert wurde, sodass ein Stoffschluss entsteht. Die Klebeart, bespielsweise Hotmelt, 2K-Klebverbindung oder sonstige, wird je nach Material und Kosten ausgewählt. Das Kernprofil, z.B. in Form eines Kunststoffhohlkammerprofils, wird auf diese Weise mit den Mantelschalen sowohl gebäudeinnenseitig, als auch gebäudeaußenseitig fest verbunden. Wie zuvor erwähnt können die Klebefüsse selbst auch rastende Befestigungselemente ausbilden. Dann können zu Klebefüssen separate Rastelemente auch entfallen.

Eine Alternative ist, dass Mantelschalen auf der zum Kernprofil / Kunststoffhohlkammerprofil weisenden Innenfläche statt der Rastfüße die genannten Positionierstege aufweisen, die sich in der Längsrichtung der Schalen über deren ganze Länge erstrecken und nur der Positionierung bei Kleben dienen. Bei der Positionierung können die Positionierstege durch die Nutwänden geführt werden. Das hat den Vorteil, das beim Klebeprozess keine Kräfte für die Verrastung der Mantelschale benötigt werden. Der Kleber bildet dann eine stoffschlüssige Verbindung.

Wie schon zur Konstruktion erwähnt kann es auch vorgesehen sein, dass während der Extrusion des Kernprofils aus Kunststoff, insbesondere PVC-hart, mit wenigstens einer, vorzugsweise zwei Befestigungsnuten in wenigstens einer der Befestigungsnute, vorzugsweise in beiden, an wenigstens eine der beiden Befestigungsnutwände zum Nutinneren weisend ein Verbindungspartner aus einem Material anextrudiert wird, das weicher ist als das Material des Kernprofils, insbesondere ein Verbindungspartner aus PVC-weich anextrudiert wird, und bei Befestigung einer Mantelschale wenigstens eines von deren Befestigungselementen, insbesondere durch im Verbindungspartner vom Befestigungselement erzeugte Materialverdrängung, an den Verbindungspartner kontaktierend angelegt und/oder in den Verbindungspartner eingebettet wird.

Die Mantelschalen, bevorzugt zumindest die gebäudeaußenseitigen, weisen vorzugsweise an wenigstens einer der in Längsrichtung verlaufenden Kanten, insbesondere der in der späteren Einbauposition des Rahmens oberen Kante einen abgewinkelten Kragen auf, insbesondere sind sie somit an der Kante L-förmig ausgebildet. Bevorzugt liegt dieser Kragen, weiter bevorzugt die Stirnfläche des Kragens, an einer im Kernprofil eingesetzten Dichtung kontaktierend an. Die Mantelschalen können so an ihrem oberen Ende den Blend-und/oder Flügelrahmen umgreifen und gegen zwischen Mantelschale und Kernprofil eindringende Nässe schützen.

Das Umgreifen erfolgt insbesondere so, dass die Kragenstirnfläche, welche beim Flügelrahmenprofil zur Glasscheibe weist bzw. beim Blendrahmenprofil zum Flügelrahmenprofil weist, eine Dichtung aussenseitig kontaktiert, mit welcher der Flügelrahmen die Glasscheibe einfasst oder mit welcher der Blendrahmen zum Flügelrahmen gedichtet ist. Die Dichtung kann weiter bevorzugt außenseitig eine plane Fläche in der Höhe der Kragenstirnfläche aufweisen, so dass Kragen und Dichtung am Übergang in der Höhe fluchten.

Vorzugsweise sind alle Anschlagbereiche zwischen Flügel- und Blendrahmen sind mit Dichtungen versehen. Es können Standard-Dichtungen verwendet werden, die ein Eindringen von Wasser in den Bereich zwischen der Alu-Mantelschale und dem Kunststoffprofil zuverlässig vermeiden. In der bevorzugten Ausführungsform bildet gebäudeinnenseitig eine eingeklipste Glasleiste, bevorzugt aus demselben Material wie die Mantelschale, bevorzugt Aluminium die Einfassung und das Widerlager des Glaseinsatzes. Bevorzugt härtet das verarbeitungsfähige Halbzeug während der ersten 24 Stunden aus.

Besonders für eine vorteilhafte Fertigung einer Eckverbindung zwischen zwei Rahmenprofilen kann die Erfindung weiterhin vorsehen, dass die Mantelschale vollständig aussen am Kernprofil vor derjenigen Ebene angeordnet ist, in welcher der Nutboden der Befestigungsnut liegt. In dieser bevorzugten Ausführung durchdringt die Mantelschale somit mit keinem ihrer Bereich, insbesondere auch nicht mit einem abgewinkelten Kragen, diese Ebene des Nutbodens.

Die Ebene, in welcher der Nutboden liegt, ist immer zumindest als eine solche Ebene zu verstehen, die innerhalb der Bodendicke des Nutbodens verläuft und parallel zu dessen Ausrichtung, insbesondere parallel zu dessen Oberfläche ist. Von außen betrachtet kann somit vor, in und hinter der Nutbodenebene Material des Nutbodens liegen.

Bevorzugt wird als Ebene, in welcher der Nutboden liegt, diejenige Ebene verstanden, in der die nach außen weisende Oberfläche des Nutbodens liegt, insbesondere also die Nutbodenfläche, die man als außenstehender Betrachter sehen kann. Bei Betrachtung von außen kann bei dieser Definition hinter und in der Nutbodenebene noch Material des Nutbodens liegen. Außen vor der Nutbodenebene liegt bei dieser Definition hingegen kein Material des Nutbodens.

Weiter bevorzugt ist die jeweilige Mantelschale einwandig ausgebildet, insbesondere umfasst sie keine Hohlkammern.

Für die bevorzugt rechtwinkelige Eckfertigung erhalten zwei vorgefertigte erfindungsgemäße Rahmenprofile aus Kernprofil, insbesondere Kunststoffhohlkammerprofil und Mantelschale endseitig jeweils einen Gehrungsschnitt, bevorzugt von 45° bei üblichen viereckigen Rahmen. Nach dem Gehrungsschnitt sind Kernprofil und Mantelschale(n) in derselben Schnittebene fluchtend.

Bei beiden Rahmenprofilen wird parallel zur Gehrungsschnittebene an jeder Seite des Rahmenprofils, welche eine Mantelschale trägt, in einer vorbestimmten Abtragungslänge ausschließlich nur Material des Rahmenprofils abgetragen, das außen vor der Ebene des Nutbodens angeordnet ist. Insbesondere wird somit kein Material vom Rahmenprofil abgetragen, das (von außen betrachtet) in Richtung zum Profilinneren hinter der Ebene des Nutbodens liegt, weiter bevorzugt auch kein Material, dass in der Ebene des Nutboden liegt.

Sofern Material außenseitig vom Nutboden abgetragen wird, wird bevorzugt sichergestellt, dass der Nutboden in seiner Dicke um nicht mehr als 5%, weiter bevorzugt nicht mehr als 2%, noch weiter bevorzugt nicht mehr als 1 % abgetragen wird.

Dadurch wird sichergestellt, dass im Bereich der Abtragung die Mantelschale vollständig entfernt wird, insbesondere ohne den Nutboden in seiner Tragfähigkeit wesentlich zu schwächen, bevorzugt gänzlichst ohne den Nutboden zu schwächen.

Bei der Definition der Ebene des Nutbodens als diejenige Ebene, in der die nach außen sichtbare Oberfläche des Nutbodens liegt, wird bei einem Abtrag von Material (von außen betrachtet) ausschließlich außen vor dieser Ebene sichergestellt, dass der Abtrag am erfindungsgemäßen Rahmenprofil erfolgt, ohne einen Materialabtrag am Nutboden vorzunehmen. Evtl. Kratzspuren des abtragenden Werkzeuges am Nutboden sollen dem Verständnis unterfallen, dass am Nutboden kein Materialabtrag erfolgt ist. Bevorzugt ist es jedoch vorgesehen, dass in dieser Ausführung das abtragende Werkzeug den Nutboden nichtmals berührt, also sogar Kratzspuren am Nutboden nicht auftreten.

Die auf Gehrung geschnittenen Endbereiche der Rahmenprofile werden nach dieser Bearbeitung durch Erwärmen aufgeschmolzen, miteinander verschweißt und hierbei die Mantelschalen miteinander in Kontakt gebracht.

Die Mantelschalen werden beispielsweise mit einer Scheibenfräse oder einem anderen spanabhebenden Werkzeug um die vorgenannte Abtragungslänge in der Längsrichtung des Rahmenprofils längenreduziert, insbesondere zurückgefräst, bevorzugt wobei die Abtragungslänge dem Maß des Abbrandes entspricht, der bei der Eckverschweißung von zwei zur Blendrahmen-oder Flügelrahmenecke zu verbindenden Kernprofilen, an jedem der beiden Profile entsteht. Beim Verschweißen der Kernprofile zur Eckverbindung wandern die Mantelschalenstirnflächen, insbesondere unter Verdrängung von geschmolzenem Kunststoff in die Befestigungsnut und/oder in Hohlkammern des Kunststoffhohlkammerprofils, bündig in der Ecke bis zur Kontaktierung zusammen und bilden eine geschlossene / dichte Ecke

Der abgeschmolzene Kunststoff bildet beim herkömmlichen Verschweißen von Profilstäben eine unschöne Schweißnaht, die in einem separaten Arbeitsgang wiederum im Sichtbereich der Stoßkanten entgratet werden muss. Im beschriebenen Verfahren wird zunächst spanabhebend Material entfernt, was einerseits zu einer materialgeminderten Schweißnaht führt, die sich in die Hohlräume des PVC-Profilkerns und insbesondere in die Hohlräume zwischen PVC-Kernprofil und Mantelschale verteilen kann und andererseits ist die volle Eckstablilität gewährleistet, da die Schnittflächen der dicken Funktionsstege, nämlich die Nutbodenstege miteinander verschweißt werden. Das verschmolzene Kunststoffmaterial dehnt sich im Inneren des Profils aus und dringt nicht mehr an die sichtbaren Oberflächen, also zwischen den Stoßkanten der Mantelschalen hervor. Eine Nachbearbeitung ist nicht mehr erforderlich.

Die Abtragungstiefe muss nicht zwingend so gewählt werden, dass Material vom Rahmenprofil bis zur Ebene des Nutboden, insbesondere dessen sichtbarer Oberfläche abgetragen wird. Die Tiefe kann geringer gewählt werden, z.B. auf die maximale Tiefe der Mantelschale begrenzt werden. So wird in jedem Fall sichergestellt, dass die Mantelschale im Abtragungsbereich vollständig entfernt wird. Ggfs. verbleibt Klebemittel auf dem Nutboden, was aber bei der thermischen Verschweißung nicht stört.

Die fertige Schweißverbindung besitzt die Vorzüge einer fugenfreien und dichten Eckschweißverbindung von Kunststoff, insbesondere PVC bei gleichzeitiger Edeloptik und/oder witterungsbeständigen Qualität des Materials der Mantelschale und wird bevorzugt mit einem automatisierten Fertigungsverfahren generiert.

Die Abtragung in dem benannten Abtragungsbereich parallel zur Gehrungsschnittebene nur bis maximal zum Nutboden, bevorzugt ohne diesen mit dem Abtragungswerkzeug zu tangieren, hat den Vorteil, dass der bevorzugt statisch tragende Nutboden in seiner Tragfähigkeit nicht geschwächt wird, so dass sich hierdurch auch eine sehr feste Eckverbindung realisieren lässt.

Das erfindungsgemäße Rahmenprofil entspricht weiter bevorzugt in seiner Gesamtbreite, bezogen auf den Querschnitt des Profils in der Breitenrichtung zwischen der Rauminnenseite und der Außenseite, den Standardmaßen. Das reine den Kern bildende Kernprofil, insbesondere Kunststoffhohlkammerprofil ist somit gegenüber den Standardmaßen in der Breite verringert. Die Mantelschalen, die bevorzugt aus Aluminium gefertigt sind, bilden die neuen Sichtflächen nach innen, als auch nach außen. Die Optik eines kompletten Fensters oder einer Tür in dem Material der Mantelschalen ist entstanden, ohne eine Verkleidung und unnötige Materialdicken oder Doppellagen zu verursachen. Ein stabiles und materialoptimiertes Flügel-Rahmensystem ist entstanden.

Die Erfindung wird nachfolgend mit Bezug auf die Zeichnungen näher erläutert.

Die Figuren zeigen im Einzelnen:
- Fig. 1: zeigt eine Kombination von Blend- und Flügelrahmen aus erfindungsgemäßen Rahmenprofilen mit Stahlverstärkungen im Blendrahmen und im Flügelrahmen bei geschlossener Fensterstellung im Querschnitt;
- Fig. 2: stellt das erfindungsgemäße Flügelrahmenprofil mit Stahlverstärkung im Querschnitt dar;
- Fig. 3: stellt das erfindungsgemäße Blendrahmenprofil mit Stahlverstärkung im Querschnitt dar;
- Fig. 4: stellt eine Ausführungsform von Blend- und Flügelrahmen aus erfindungsgemäßen Rahmenprofilen ohne Stahlverstärkungen im Querschnitt dar;
- Fig. 4a - 4h: stellen weitere Ausführungsformen von Blend- und Flügelrahmen, Setzpfosten- und Stulpprofilen aus erfindungsgemäßen Rahmenprofilen im Querschnitt dar;
- Fig. 5: stellt eine perspektivische Ansicht des erfindungsgemäßen Blendrahmenprofils mit zurückgefrästen Mantelschalen mit Gehrungsschnitt dar;
- Fig. 5a: stellt das erfindungsgemäße Flügelrahmenprofil mit dem Fräsbereich im Querschnitt dar;
- Fig. 5b: stellt das erfindungsgemäße Blendrahmenprofil mit dem Fräsbereich im Querschnitt dar;
- Fig. 6: stellt eine Detailansicht einer Eckverbindung aus zwei erfindungsgemäßen Rahmenprofilen von der Gebäudeaußenseite betrachtet dar;

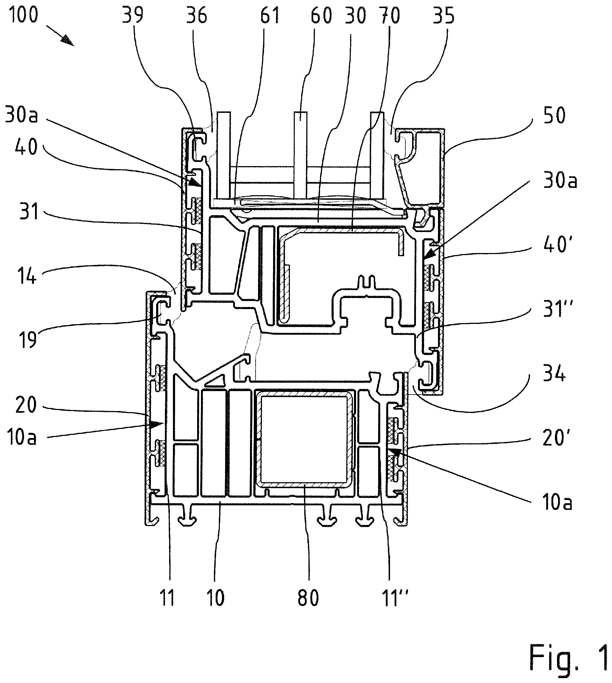

In Figur 1 ist eine Kombination von Blend- und Flügelrahmen aus erfindungsgemäßen Rahmenprofilen mit Stahlverstärkungen im Blendrahmen und im Flügelrahmen im Querschnitt bei geschlossener Fensterstellung dargestellt. Hierdurch ist ein Flügel-Rahmensystem 100 gebildet, welches ein Flügelrahmenprofil 30 als Kernprofil und ein Blendrahmenprofil 10 als Kernprofil, insbesondere jeweils aus Hohlkammerkunststoffprofilen umfasst. Beide Profile 10, 30 weisen jeweils mindestens eine Stahlverstärkung 80, 70 auf. Der Flügelrahmen ist mit dem Blendrahmen beweglich verbunden und bietet in der Glasfalz 61 des Flügelrahmenprofils 30 Raum zur Aufnahme eines Glaseinsatzes 60. Zwischen Flügelrahmenprofil 30 und Blendrahmenprofil 10 sind zwei Dichtungsstränge 14, 34 und am Flügelrahmenprofil 30 ein Dichtungsstrang 36 angeordnet, bevorzugt einextrudiert.

Die Querschnittsbreite bezogen auf die Bautiefe (betrachtet zwischen Gebäudeaussen- und Rauminnenseite) des Blendrahmenprofils 10 beträgt vorzugsweise 82 mm, ist aber auch für weitere Bautiefen anwendbar, so dass es in bestehende Standardrahmenprogramme eines Herstellers integriert werden kann.

Alle begrenzenden Maße eines Flügel-Rahmensystem 100 aus erfindungsgemäßen Rahmenprofilen bilden bestehende Flügelsysteme ab. Die Außensichtflächen von Flügelrahmenprofil 30 und Blendrahmenprofil 10 sind durch Mantelschalen 20,40, 20', 40' ausgebildet und Bestandteil der kombinierten Profilkonstruktion aus dem jeweiligen Flügelrahmen-Kernprofil und dem Mantelschalenprofil bzw. dem Blendrahmen-Kernprofil und dem Mantelschalenprofil. Es handelt sich bei dieser Erfindung nicht um eine Verkleidung mit Blenden, die durch eine Doppellagigkeit gekennzeichnet ist.

Die Form des Profilsystems 100 zeichnet sich sowohl für den Flügel- als auch für den Blendrahmen dadurch aus, dass die senkrecht verlaufenden gebäudeaussenseitigen und raum innenseitigen Kernprofil-Außenwände zumindest bereichsweise zum Profilinneren eingerückt sind, bevorzugt aber die dicksten Wandungen bilden, die mit ihren Eigenschaften die tragenden Funktionsstege 11, 11", 31, 31" bilden. Durch die Einrückung bildet sich eine Befestigungsnut 10a, 30a auf der Außenwand des jeweiligen Kernprofils 10, 30 aus, deren Nutboden durch die Funktionsstege 11, 11", 31, 31" gebildet wird.

Die Einrückung der Funktionsstege 11, 11", 31, 31", bzw. die Nuttiefe ist bevorzugt auf das Maß ausgelegt um welches die Klebefüsse inklusive Klebemittelauftrag von den zu den Kernprofilen weisenden Mantelschaleninnenflächen in Richtung zu den Kernprofilen vorstehen, insbesondere welches somit für die Ausgestaltung der Rast- und Klebeverbindungen zur Mantelschale 20, 20', 40, 40'erforderlich ist.

Die konstruktive Gestaltung der Mantelschalen 20, 20', 40, 40' ist kostenbewußt nach materialminimierten Gesichtspunkten erfolgt. Alle funktionalen Anforderungen sind in der mit tragenden, einwandigen und flachen Ausführungsform der -Mantelschale 20, 20', 40, 40' umgesetzt. Die gebäudeaußenseitig angeordneten Mantelschalen 20, 40 sind an ihrem im Schnitt betrachteten oberen Ende zu einem in Richtung zum Profilinneren, bzw. zur gegenüberliegenden Außenwand weisenden Kragen abgewinkelt, somit L-förmig geformt. Damit können sie die Dichtungsaufnahmenut 19, 39 am Blend- und Flügelrahmen umgreifen, um das Eindringen von Nässe zwischen den Mantelschalen 20, 40 und den Funktionsstegen 11, 31 zu verhindern. Bevorzugt kontaktieren hierbei die Kragenstirnflächen die jeweilige Dichtung 14, 36, insbesondere an deren zur Gebäudeaußenseite weisenden Dichtungsstirnfläche.

Die Mantelschalen 20, 40 bilden so bevorzugt mit ihrer Oberfläche einen bündigen Anschluss an die Anschlagdichtungen 14, 36, die ihrerseits in geschlossener Fensterstellung den Spalt zum Flügelrahmen bzw. zum Glaseinsatz 60 abdichten. Gebäudeinnenseitig sind die Mantelschalen 20', 40' am oberen Ende I-förmig ausgeführt und schließen bündig mit den oberen Enden der Glasleistennuten 16, 38 ab.

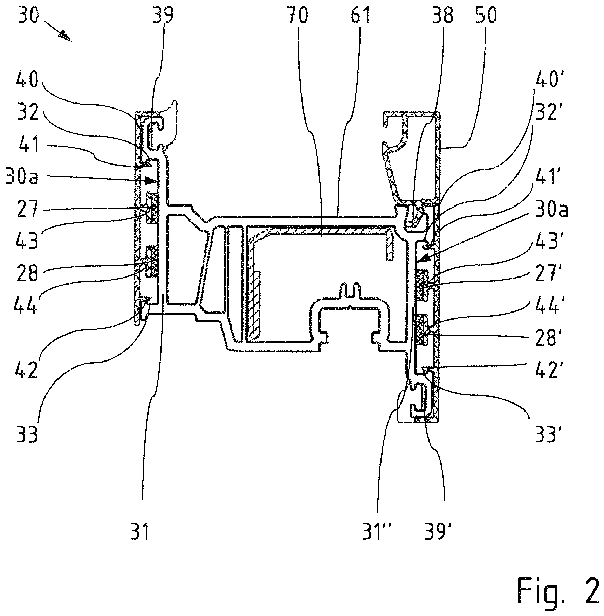

Figur 2 stellt den erfindungsgemäßen Flügelrahmen mit Stahlverstärkung im Querschnitt dar. Gebäudeaußen- und gebäudeinnenseitig greifen die beiden als Befestigungselemente vorgesehenen Rastnasen 41, 42, 41' 42' der Mantelschalen 40, 40', die in der Längsrichtung über die gesamte Länge der Mantelschalen erstreckt sind, in die Hinterschneidungen 32, 33, 32', 33' des Flügelrahmens 30 ein. Diese Hinterschneidungen sind an den Enden der Nutwände der Befestigungsnut 30a angeordnet. Über diese Verrastung werden die Mantelschalen 40, 40', insbesondere die sich durch eine flache Bauweise mit geringer Tiefe auszeichnen, positioniert und formschlüssig und/oder kraftschlüssig fixiert.

Alternativ, aber hier nicht gezeigt, können statt der Raststege gerade oder sich verjüngende Stege vorgesehen sein, die eine Positionierung der Mantelschale relativ zu den Befestigunsgnutwänden bewirken.

Das obere Ende der gebäudeaußenseitigen Mantelschalen 40 umgreift L-förmig mit einem zum Profilinneren abgewinkelten Kragen den an seinen oberen Ende jenseits / oberhalb der Befestigungsnutwand zur Dichtungsaufnahmenut 39 ausgeformten Funktionssteg / Nutboden 31 des Flügelrahmenprofils 30. Das untere Ende der Mantelschalen 40 läuft gerade, bevorzugt mit einem Überstand zum Flügelrahmenprofil 30 aus. Die gebäudeinnenseitigen Mantelschalen 40' umgreift am unteren Ende mit einem zum Profilinneren abgewinkelten Kragen L-förmig den zur Dichtungsaufnahmenut 39' ausgeformten Funktionssteg / Nutboden 31 des Flügelrahmenprofils 30 und endet am oberen Ende bündig auf Höhe der oberen Kante der Glasleistennut 38. In dieser ist die Glasleiste 50 eingeklipst. Die jeweiligen Kragenstirnflächen berühren auch hier bevorzugt die Dichtungen, insbesondere in den Dichtungsnuten, welchen von den Kragen bereichsweise umgeben sind.

Die rückwärtig an den Mantelschalen 20, 40 und von der Sichtfläche der Mantelschalen abgewandten Seite, also auf der zum Kernprofil gewandten Innenfläche der Mantelschale als weitere Befestigungselemente angeformten Klebefüsse sind zwischen den Rastnasen 41, 42, 41', 42' (alternativ den Positionierstegen) angeordnet. Die Klebefüsse weisen eine parallel zum Befestigungsnutboden und von diesem um die Klebemittelstärke beabstandete Klebemittelauftragsfläche auf. In diesem Beispiel sind die Klebefüsse T-förmig ausgebildet.

Sobald die Mantelschalen 20, 40 positioniert und bevorzugt eingerastet sind, wirkt gleichzeitig der erforderliche Anpressdruck über die Klebefüsse auf den an den Funktionsstegen 31, 31", welche den Befestigungsnutboden bilden, applizierte Klebstoffstrang. Eine stoffschlüssige Verbindung ist gebildet. Die Profile werden durch die mechanische Verrastung in Position gehalten. Nach dem vollständigen Aushärten des Klebstoffs 27, 28, 27', 28', vorzugsweise nach 24 Stunden spätestens, entsteht eine unlösbare, stoffschlüssige Verbindung der Profile untereinander.

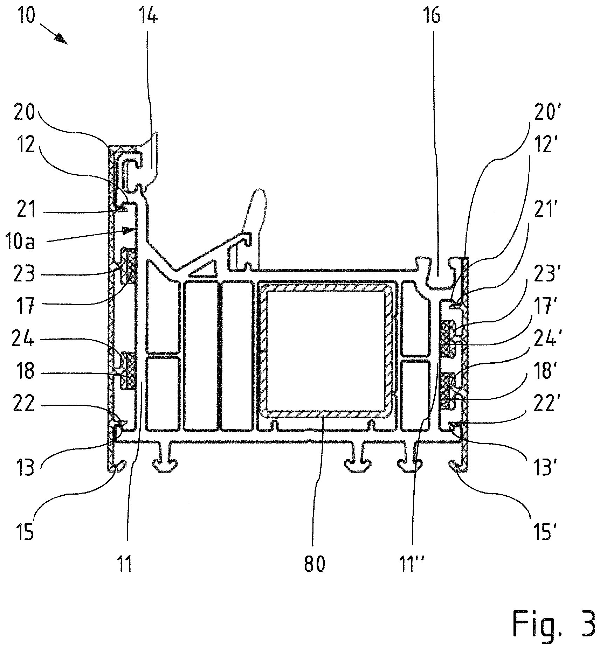

Fig. 3 stellt das erfindungsgemäße Blendrahmenprofil mit Stahlverstärkung im Querschnitt dar. Die konstruktive Gestaltung der gebäudeaußenseitigen Mantelschale 20 ist mit der Ausführung für das Flügelrahmenprofil 30 gemäß Figur 2 und hinsichtlich der paarig angeordneten Rastnasen 21, 22 mit Verbindung zu den Hinterschneidungen 12, 13 im Kunststoffhohlprofil, sowie der zwischen den Rastnasen angeformten paarig vorhandenen Klebefüssen 17, 18, 17', 18' vergleichbar. Jedoch weist die Mantelschale 20 eine größere Gesamthöhe gegenüber der Mantelschale 40 auf und ist am unteren Ende in Richtung zum Profilinneren abgewinkelt, insbesondere zu einem bevorzugt nur halben Blendrahmenfuß 15 ausgeformt. Die gebäudeinnenseitigen Mantelschalen 20' endet mit dem oberen Ende bündig mit dem umschließenden Steg der Glasnut 16 und ist am unteren Ende in Richtung zum Profilinneren abgewinkelt, insbesondere zu einem bevorzugt nur halben Blendrahmenfuß 15' ausgeformt.

Alle Mantelschalen 20, 20', 40, 40' sind in den dargestellten Ausführungen, bevorzugt bei allen möglichen Ausführungen der Erfindung einwandig ausgeformt, das heißt, dass sie keine in Querschnittsbetrachtung abgeschlossenen Hohlräume aufweisen.

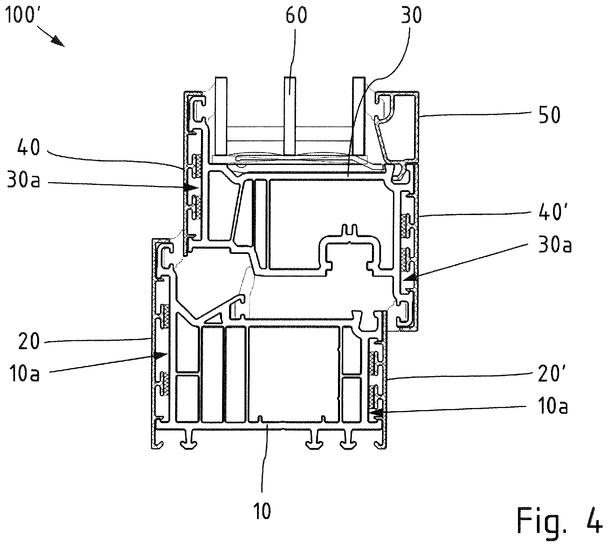

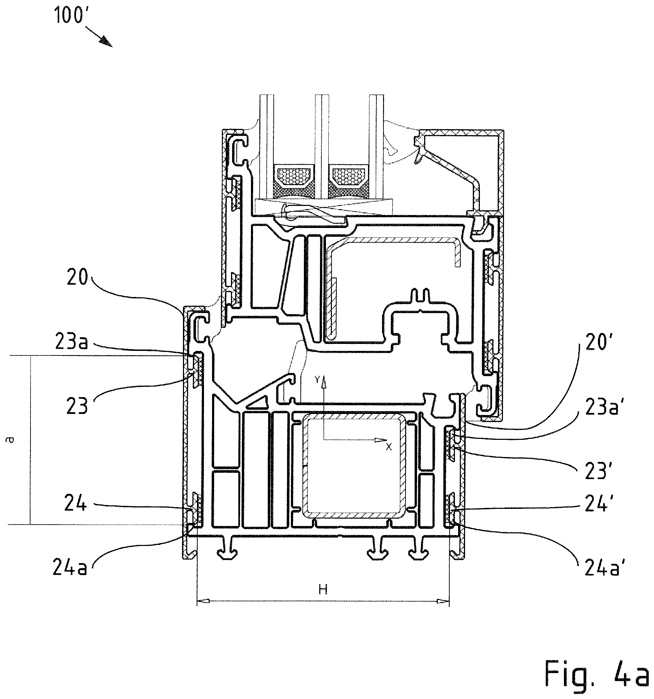

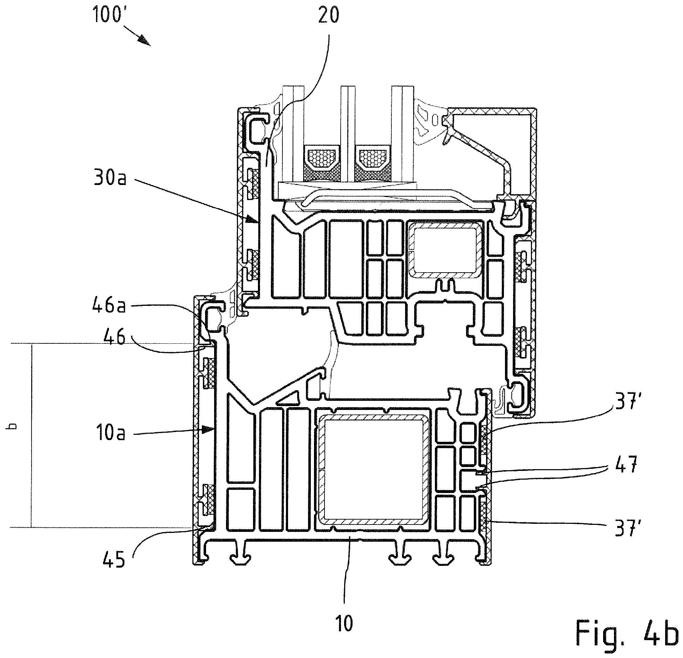

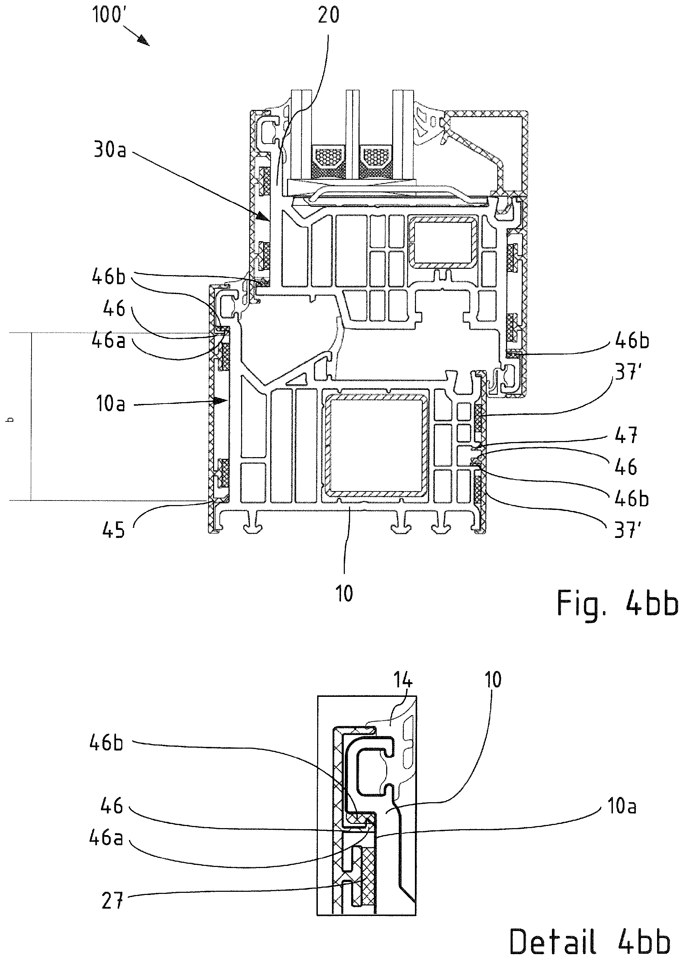

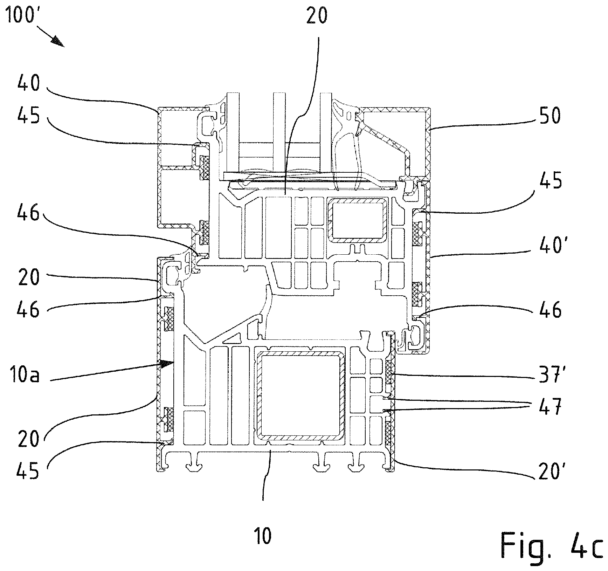

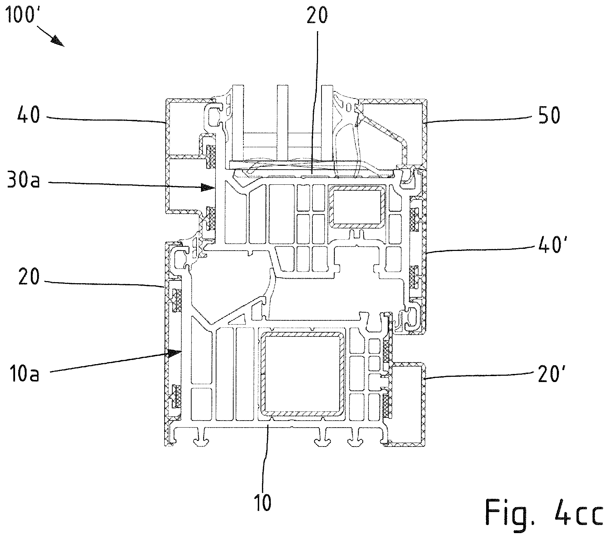

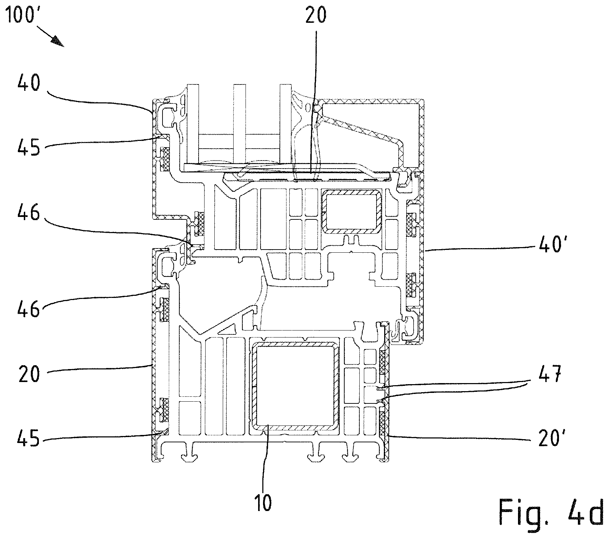

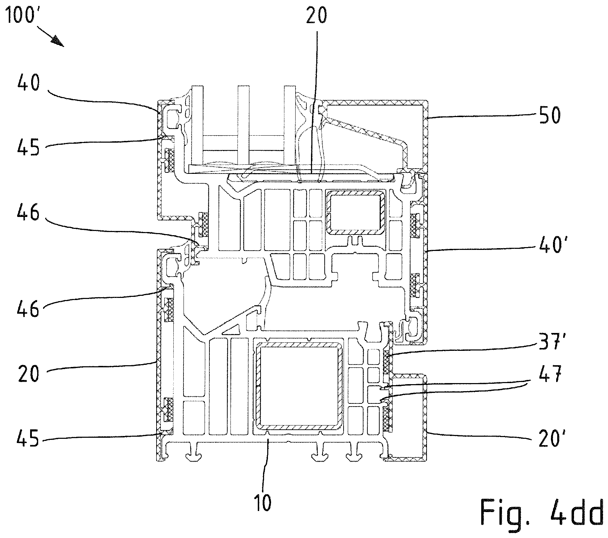

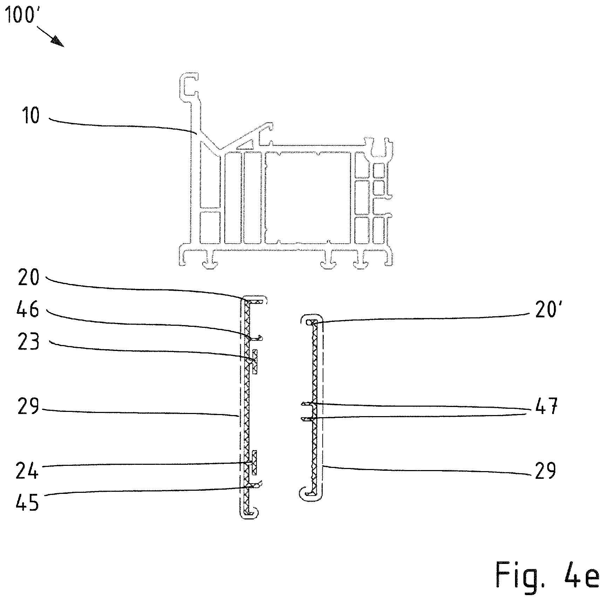

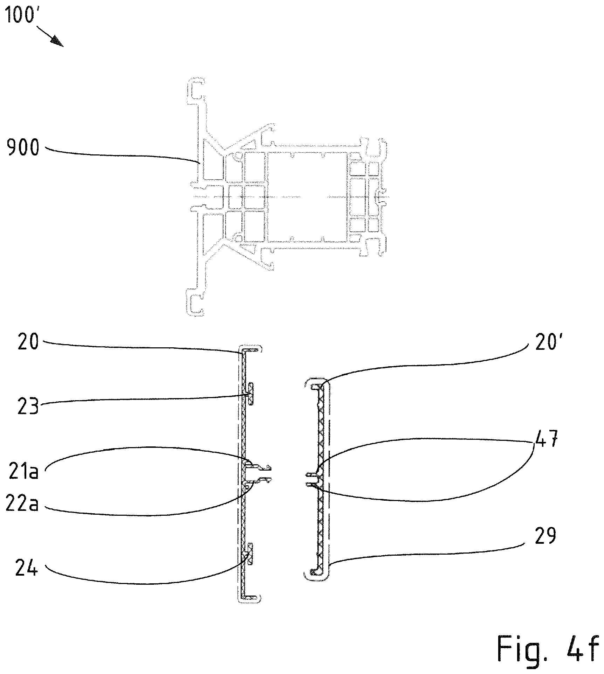

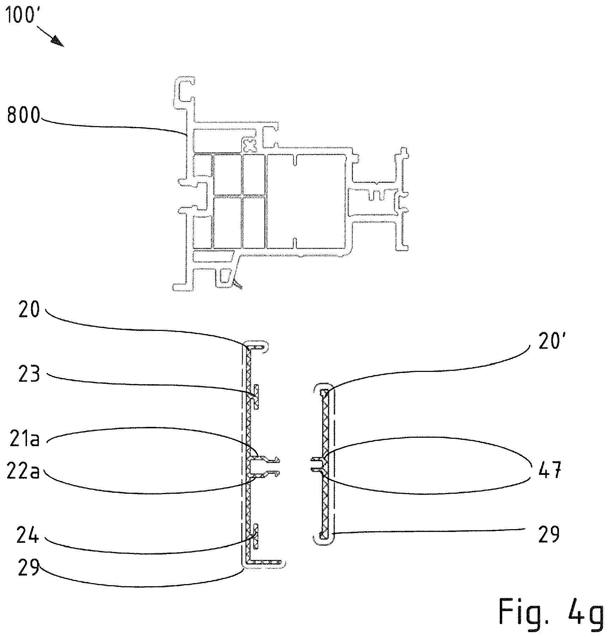

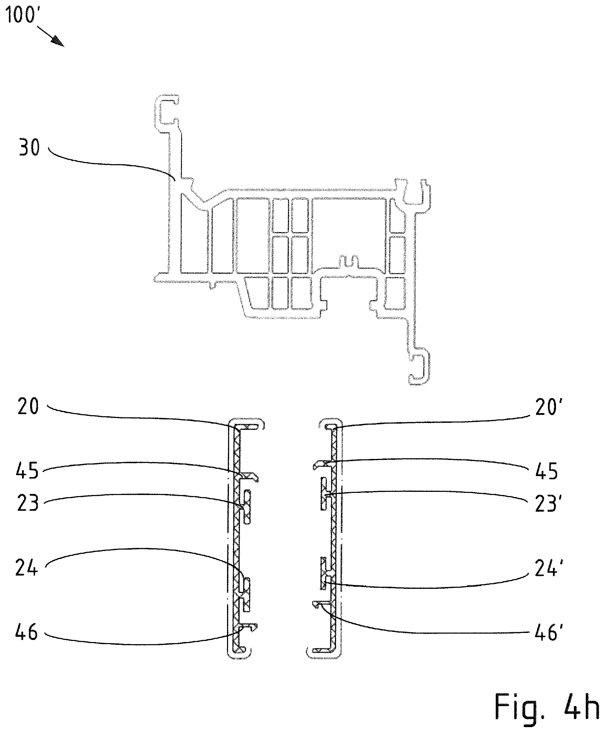

Figur 4 stellt eine Ausführungsform des erfindungsgemäße Flügel-Rahmensystems ohne Stahlverstärkungen im Blendrahmenprofil und im Flügelrahmenprofil im Querschnitt dar. Diese Variante verdeutlicht, dass das Flügel-Rahmensystem in sich stabil ist und nicht notwendigerweise eine Stahlverstärkung benötigt. Das jeweilige Kernprofil 10, 30 mit den Funktionsstegen / Nutböden 11, 11", 31, 31", die bevorzugt die dicksten Stege der Hohlkammerprofile sind, sind tragend und die Mantelschalen 20, 20', 40, 40' verleihen dem Profilsystem eine so hohe Stabilität, dass auf zusätzliche Stahlverstärkungen verzichtet werden kann.

Figur 4a stellt eine weitere Ausführungsform des erfindungsgemäße Flügel-Rahmensystems dar. Hierbei übernehmen die Klebefüsse 23, 24 durch die Ausformung zu Rastvorsprüngen 23a, 24a an ihren freien, insbesondere in Höhenrichtung voneinander wegweisenden Enden nicht nur die Funktion einer zum Kernprofil 10, 30 weisende Klebefläche, sondern eignen sich auch zur Verrastung mit den Hinterschneidungen des Kernprofils 10, 30 an den Befestigungsnutwänden. Die Raststege 21, 22 gemäß den Figuren 1 bis 4 können bei dieser Variante entfallen. Die Klebefüße 23, 24 rücken weiter auseinander. Vorzugsweise entspricht der Abstand a der Rastvorsprünge 23a, 24a dem Maß der äußeren Begrenzungen des Nutbodens der Befestigungsnut 10a in Höhenrichtung.

Ein größerer Abstand a der Klebefüße 23, 24 zueinander, insbesondere der durch die im Vergleich zur Gesamtaußenwand großen Nutbodenhöhe erzielbar ist, bewirkt ein höheres Trägheitsmoment um die x-Achse und führt zu einer Erhöhung der Schubfestigkeit und Schubfedersteifigkeit.

In Kombination mit der zusätzlichen Verklebung wird an den Klebeflächen ein stoffschlüssiger Schubverbund erzielt, was die Stabilität des Rahmensystems zusätzlich erhöht.

Durch die Beabstandung und beidseitige Anordnung der Mantelschalen (20, 20', 40, 40') und dem großen Abstand H der Eigenschwerpunkte der Mantelschalen zueinander, ergibt sich neben dem eigenen Flächenträgheitsmoment der jeweiligen Schale durch den schubfesten Verbund mit einer möglichst hohen Schubsteifigkeit/Schubfedersteifigkeit ein signifikant höheres gesamtes Flächenträgheitsmoment durch die jeweiligen Steiner-Anteile. Dadurch kann, anders als beim Addieren der reinen Eigenträgheitsmomente eine deutlich höhere Biegesteifigkeit erzielt werden und das Kombinationssystem bietet einen höheren Widerstand gegen z.B. Wind- und Temperaturlasten. Ziel der stoffschlüssigen Verklebung ist es einen möglichst hohen Wirkungsgrad der Schubverbindung zu erreichen. Die Größe der Klebeflächen und der Klebefüsse und deren Abstand zueinander bewirken einen besonders stabilen Schubverbund, der im Zusammenwirken mit den äußeren, umschließenden Aluminium-Mantelschalen 20, 20', 40, 40', ein hohes Trägheitsmoment und eine sehr gute Querzugfestigkeit erzeugen.

Bei den weiteren Figuren 4b bis 4h sind die Befestigungsnutwände nicht mit Hinterschneidungen versehen, im Gegensatz zu den anderen beschriebenen Ausführungen.

Figur 4b und Figur 4bb zeigen eine weitere Ausführungsform, bezogen auf die Verbindungselemente 45, 46 der Mantelschalen 20, 20', 40, 40'.

Die Mantelschalen 20, 20', 40, 40' weisen bei diesen Varianten folgende Befestigungselemente auf: Klebefüsse 23, 24, Referenzsteg 45, Keilsteg 46 und Zentrierstege 47 auf.

Der Referenzsteg 45 bildet den dicksten Steg der Verbindungselemente 45, 46, verfügt über ein leicht abgerundetes Ende als Einschiebradius bzw. Anlaufschräge und dient als Anschlag in der Ecke der Befestigungsnut 10a und fungiert als Abstandshalter zum vertikal verlaufenden Nutboden.

Der Referenzsteg 45 ist Bezugspunkt für die vorrangige Positionierung der Mantelschalen 20, 40, 40' und ist klemmbar mit dem Kernprofil 10, 30 lösbar verbunden. Er fungiert als Bezugspunkt und Ausrichtungspunkt zur Justierung der Mantelschalen 20, 40, 40'. Der Referenzsteg 45 legt die Lage der Mantelschalen 20, 40, 40' in x und y-Achse fest.

Die Positionierung der Mantelschalen erfolgt durch paralleles Ansetzen an das Kernprofil 10,30. Die beiden Befestigungselemente 45, 46 ragen am weitesten aus der Mantelschale in Richtung des Kernprofils 10, 30 und dienen auch als Führungselemente, die im Abstand b zueinander angeordnet sind. Abstand b definiert den größtmöglichen Abstand der Verbindungselemente 45, 46 innerhalb der Befestigungsnut 10a. Das Befestigungselement entsprich einem Steg mit keilfömigen Kopfstück, was eine Keilnase aufweist, die zur Nutwand gerichtet ist. Das Befestigungselement 46 weist die gleiche Länge, wie der Referenzsteg 45 auf und gewährt als zweiter Steg die Parallelität der Mantelschalen 20, 40, 40' zum Nutboden 10a, 30a.

Das Befestigungselement 46 weist einen dünneren Querschnitt gegenüber dem Referenzsteg 45 auf und verfügt am freien Ende über eine vorspringende Keilnase 46a, die bei dieser Ausführungsform des Kernprofils 10, 30 aus PVC nicht in eine dafür vorgesehene Hinterschneidung einrastet. Beim Zusammenfügen der Mantelschale 20, 40, 40' mit dem Kernprofil 10, 30 unter Druck verformt die harte Mantelschale aus Aluminium das weichere PVC-Material derart, dass es zu einer Keilverbindung von Mantelschale mit dem Kernprofil kommt.

Aluminium weist gegenüber PVC eine höhere Härte und Festigkeit auf. Die in Richtung zur Nutwand vorspringende Keilnase 46a aus Aluminium drückt sich in das weichere PVC-Material ein, was zu einer gezielten Formänderung in Gestalt einer Einkerbung im PVC führt, in der sich die Keilnase 46a einsenkt und verhakt.

In Figur 4bb ist eine Variante dargestellt, bei der das Kernprofil 10, 30 an der hier oberen Nutwand mit einem anextrudierten PVC-Weich Material 46b als Verbindungspartner für das Befestigungselement 46 versehen ist. Durch sein elastisches Verhalten eignet es sich als Verbindungspartner für die Keilnase 46a ideal, um auch mit geringerem Druck eine Verbindung zwischen Mantelschale 20, 20, '40, 40' und Kernprofil herzustellen. Durch Andrücken und/oder Eindrücken und/oder Einbetten des Verbindungselementes 46, 46' wird das Material im Verbindungspartner 46a entsprechend der geometrischen Form des Verbindungselements verdrängt und führt zu einer kraft- und/oder form-und/oder reibschlüssigen Verbindung. Der Werkstoff behält seine Masse und seinen Zusammenhalt bei. In dieser Ausführung kann nur das funktionale Kopfstück, die Keilnase 46a, in den Verbindungspartner eingreifen und der Stegbereich des Verbindungselementes kontaktfrei dazu sein. Es kann auch vorgesehen sein, dass der Steg den Verbindungspartner zumindest kontaktiert oder auch darin eingebettet ist. Es können ebenso andere Formgestaltungen des Kopfstückes vorgesehen sein.

Weich-PVC enthält Phthalate, die zu einem elastischen Verhalten des PVC-Materials führen. PVC-Weich 46a ist fühlbar weicher und elastischer, als PVC-hart, aus dem das Kernprofil vorzugsweise gefertigt ist. Die Anschlagdichtung 14, besteht ebenfalls aus PVC-Weich und wird während des Extrusionsvorgangs separat anextrudiert. An der Mantelschale20 dichtet PVC-Weich 46b zusätzlich gegen eindringendes Wasser hinter der Mantelschale 20. Weiterer Vorteile dieser Verbindungsart liegt im Toleranzausgleich. Das elastische PVC-Weich 46b ist zwischen dem Kernprofil 10, 30 und der Mantelschale 20, 20, '40, 40' eingebracht und es ist in der Lage, die Toleranzen der angrenzenden Fügeteile zu kompensieren.

Die Mantelschalen 20, 20, '40, 40' und die Kernprofile 10, 30 sind jeweils über die beiden Verbindungsstege, die die Verbindungsbereiche zwischen Schale und Kern bilden, verbunden und greifen in den beiden Endbereichen der Befestigungsnut 10a, 30a, ein. Durch die konstruktive Begrenzung der Nut entsteht eine gewünschte Klemmwirkung.

Die feste Verbindung wird durch die Materialverdrängung im PVC-Material der Kernprofils bzw.- des Verbindungspartners als Negativform der Keilnase 46a einerseits und durch die Geometrie der Keilnase 46a, die wie ein Widerhaken fungiert andererseits, geschaffen.

Der Verbindungsteg 46, 46' kann auch beliebig anders geformt sein. Jede geometrische Kontur ist geeignet, die vergrößernde Ausformungen aufweist, welche in das Verbindungsmaterial hineinreichen und dieses räumlich verdrängen kann. Auch ein Steg mit flacher Oberfläche kann durch Andrücken an das weichere Material verdrängen und eine Reibschlussverbindung mit erhöhter Klemmwirkung erzielen.

Beide Varianten gemäß der Figuren 4b und 4bb ermöglichen das Justieren der Mantelschale 40, 40', 20, 20' über Verbindungselemente 45, 46, 47, die eine eindeutige und präzise Fixierung der Mantelschalen 40, 40', 20, 20' bei der Erstmontage unter Toleranzausgleich in y-Richtung gewährleisten.

Zusätzlich wird ein formloser Stoff, nämlich Klebstoff 27, 28 verwendet, der zwischen den Klebefüssen 23, 24 und dem Nutboden 10a appliziert ist. Diese wesentliche Verbindung erfolgt stoffschlüssig über zwei Klebestränge 37, die sich in den Hohlräumen unter der Mantelschale 20' erstrecken. Damit wir eine stoffschlüssige Verbindung im Werkstoff selber hergestellt, die einen Schubverbund bildet und dem Profilsystem Formbeständigkeit und Stabilität verleiht.

Diese Variante, wie auch die folgenden Ausführungsformen gemäß der Figuren 4c - 4dd fußen auf diesem Befestigungsprinzip, welches sich durch mindestens vier Mantelschalen 20, 20', 40, 40', mit jeweils mindestens zwei beabstandete Klebefüße 23, 24 auszeichnet und durch die Verklebung mit formstabilen Mantelschalen aus Aluminium einen Schubverbund schafft, der für ein statisch stabiles und belastbares Profilsystem steht, mit dem auch große Fensterelemente gebaut werden können.

Figuren 4c und 4d bilden Ausführungsformen mit flächenbündiger Wetterseite ab, bei denen die Mantelschalen 40, 20 an der hier linken Außenseite fluchtend zueinander angeordnet sind.

Figuren 4cc und 4dd zeigen Ausführungsformen mit beidseitig, flächenbündigen Mantelschalen 40, 40', 20, 20' ab, die fluchtend zueinander angeordnet sind, sowohl auf der Wetter-, als auch auf der Raumseite.

Figuren 4e - 4h zeigen verschiedene Varianten von Kernprofilen in der Übersicht mit den zugehörigen Mantelschalen 40, 40', 20, 20' aus Aluminium für innen und außen. Figuren 4a und 4h stellen das Blendrahmen- und Flügelprofil gemäß der Figur 4b dar und sind dort beschrieben.

Figur 4f zeigt ein Setzpfostenprofil 900 als Beispiel eines Blendrahmenprofils, das ebenfalls mit Mantelschalen 20, 20' beidseitig beplankt werden kann. Die Außenseite wird mit zentriert angeordneten Raststegen 21a, 22a im Setzpfostenprofil formschlüssig eingerastet und zusätzlich mit appliziertem Klebstoff an den Klebefüßen 23, 24 stoffschlüssig mit dem Setzpfostenprofil verbunden.

Figur 4g zeigt ein Stulpprofil 800, das ebenfalls mit Mantelschalen 20, 20' beidseitig beplankt werden kann. Die Außenseite wird mit zentriert angeordneten Raststegen 21a, 22a im Setzpfostenprofilformschlüssig eingerastet und zusätzlich mit appliziertem Klebstoff an den Klebefüßen 23, 24 stoffschlüssig mit dem Setzpfostenprofil verbunden.

Alle Mantelschalen aus Aluminium sind beliebig auf der Außen- und/oder Innenblende beschichtbar. Die Beschichtungen können zum Beispiel in Form von zusätzlichen, vorgeformten Schalen aus verschiedensten Materialien sein oder als Dekorfolien oder als Lackierung ausgeführt sein.

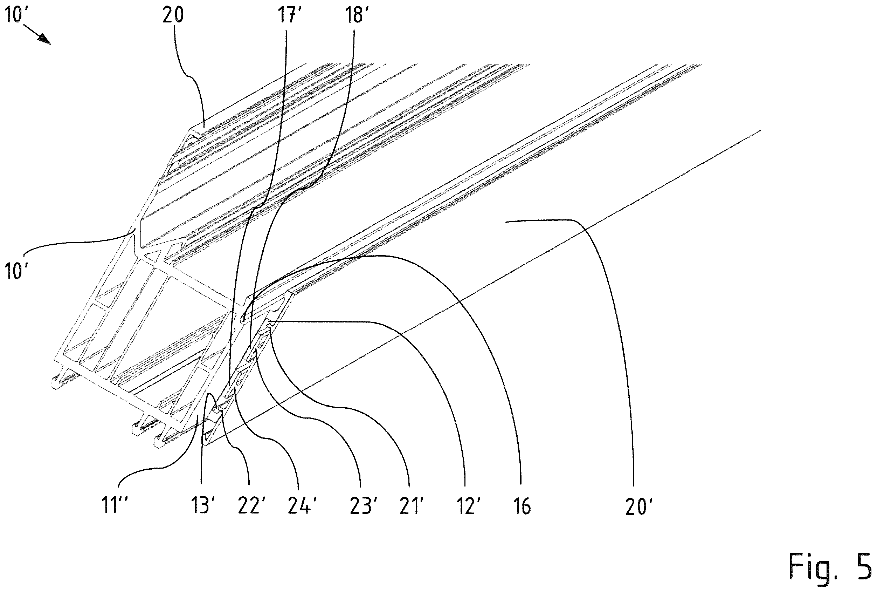

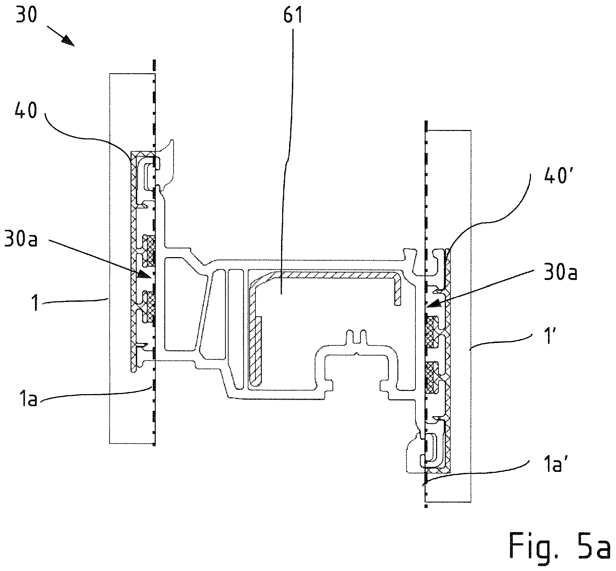

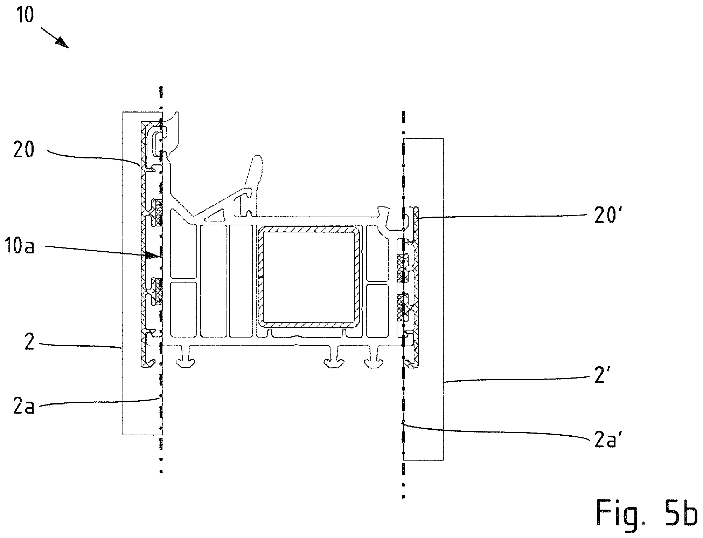

Fig. 5 stellt eine perspektivische Ansicht des erfindungsgemäßen Blendrahmenprofils mit zurückgefrästen Mantelschalen am Bildausschnitt des Blendrahmenprofils 10', für die Mantelschale 20' mit Gehrungsschnitt dar. Erkennbar ist, dass nur solche Materialteile des Kunstoffhohlkammerprofils und der Mantelschale abgetragen sind, welche in Richtung nach außen über den Nutboden der Befestigungsnut, bzw. Funktionssteg 10' und 11' überstehen. Dabei bleibt bevorzugt die Nutbodenoberfläche völlig unverletzt, so dass keinerlei statische Schwächung des vom Befestigungsnutboden gebildeten Funktionssteges erfolgt.

Fig. 5a stellt den erfindungsgemäßen Flügelrahmen mit den Fräsbereichen 1, 1' im Querschnitt dar. Entscheidend ist, dass das Gesamtprofil, bestehend aus Kernprofil 30 und den beidseitig verbundenen Mantelschalen 40, 40' von den jeweiligen Außenseiten betrachtet bis maximal zur Nutbodenoberfläche, bevorzugt bis exakt zum Nutboden abgetragen wird, weiter bevorzugt ohne diesen zu verletzen, bevorzugt also exakt um die maximale Tiefe der Mantelschalen 40, 40', bis zur in Längsrichtung erstreckten Fräsebene 1a, 1a' wegefräst wird. Die Fräsebene liegt hier somit in oder vor der Ebene des Nutbodens.

Fig. 5b stellt den erfindungsgemäßen Blendrahmen mit den Fräsbereichen 2, 2' im Querschnitt dar. Auch hier, genau wie beim Flügelrahmen, wird das Gesamtprofil, bestehend aus Kernprofil und den beidseitig verbundenen Mantelschalen 20, 20' bis maximal zum Nutboden der Befestigungsnut 10a, bevorzugt bis exakt zum Nutboden abgetragen, insbesondere ohne diesen zu verletzen, weiter bevorzugt also exakt um die maximale Tiefe der Alu-Mantelschalen 20, 20', bis zur Fräsebene 2a, 2a' wegefräst. Dies ist insbesondere hinsichtlich der in der Figur linken Mantelschale so abgebildet.

Bei der rechten Mantelschale ist erkennbar, dass die Abtragung von außen betrachtet deutlich vor dem Nutboden endet, nämlich um die Dicke des Klebemittels vor den Nutboden, insbesondere somit mit der Abtragung nur komplett die Mantelschale mit Ihrer maximalen Dicke von der (Aussenseite betrachtet) abgetragen wird. Die Klebestränge unterhalb der Klebefüsse der matelschale werden hierbei stehenbleiben.

Bei allen möglichen Ausführungen wird beim jeweiligen Abtragen bevorzugt im Abtragungsbereich vom Kernprofil maximal so viel Material abgetragen, wie es zur vollständigen Entfernung der Mantelschale nötig ist. Bevorzugt werden dabei vom Kernprofil ausschließlich nur solche Materialanteile im Abtragungsbereich entfernt, die nach aussen gerichtet über der Nutbodenoberfläche der Befestigungsnut überstehen, bzw. außen vor der Ebene der Nutbodenoberfläche liegen.

Der Nutboden wird bevorzugt, insbesondere sofern sich ein Eingriff des abtragenden Werkzeuges in den Nutboden nicht vermeiden lässt, um nicht mehr als 1% seiner Dicke abgetragen

Besonders bevorzugt wird der Nutboden bei allen Ausführungen der Abtragung nicht von dem abtragenden Werkzeug berührt.

Die Mantelschalen sind immer so konzipiert, dass beim Zurückfräsen der Mantelschalen die äußeren Kunststoff-Funktionsstege, also die jeweiligen Nutböden nicht zerstört werden.

Zu Herstellung des abgebildeten Flügel-Rahmensystem von Fenstern- oder Türrahmen aus Kunststoff, mit Mantelschalen, bevorzugt Aluminium-Mantelschalen sind folgende Verfahrensschritte durchzuführen:
1. Das Kernprofil wird als Flügel- und/oder Blendrahmenkernprofil in einer gewünschten Produktionslänge, z.B. von 6,5 m mit den nach außen offenen Befestigungsnuten extrudiert.
2. Auf der von dem jeweiligen Befestigungsnutboden gebildeten Funktionsflächen 11" wird Klebstoff 17', 18' in Form von Klebestränge(-bahnen) über die Gesamtlänge der Profile auf den statisch tragenden vom Befestigungsnutboden gebildeten Funktionssteg 11" appliziert 3. Die Mantelschale 20' wird auf das gewünschte Längenmaß, z.B. der Produktionslänge von 6,5 m abgelängt, mittels der Rastnasen 21', 22' an den Hinterschneidungen 12', 13' am Kernprofil 10,30 positioniert und formschlüssig fixiert.
   Der Klebstoff kann in flüssiger Form oder als doppelseitiges Klebeband verstanden werden.
4. In verrasteter Position pressen sich die Klebefüße 23', 24' stoffschlüssig an den Klebstoff 17', 18'.
5. Ein verarbeitungsfähiges Halbzeug von der gewünschten Produktionslänge, z.B. 6,5 m ist gefertigt
6. Während der ersten 24 Stunden erfolgt die Aushärtung im Lager

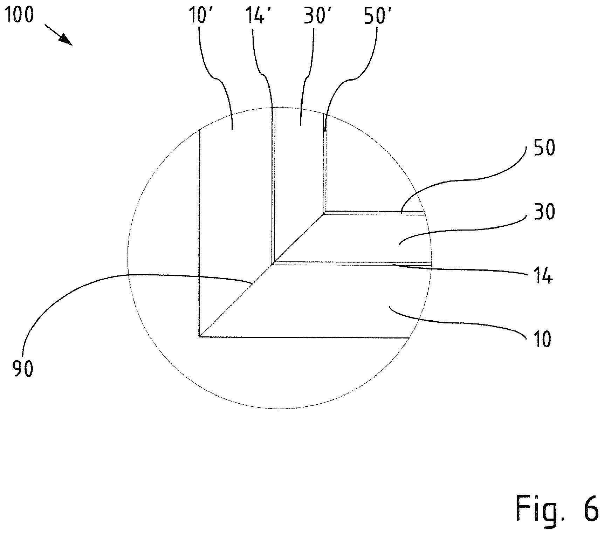

Zu Herstellung der abgebildeten Eckverbindung (s. Figur 6) von Fenster-oder Türrahmen aus Kunststoff, mit Mantelschalen, bevorzugt Aluminium-Mantelschalen sind folgende Verfahrensschritte durchzuführen:
1. das kombinierte Profil aus Kernprofil und Mantelschale erhält einen Gehrungsschnitt z.B. von 45° (Standardzuschnitt) bei einer rechtwinkligen Ecke s. Fig. 5
2. Die Mantelschalen 20, 20' werden beispielsweise mit einer Scheibenfräse in der Länge parallel zum Gehrungsverlauf, also die Gehrung erhaltend um ein vorbestimmtes Maß, z.B. von 3 mm, insbesondere das dem Abbrand entspricht, zurückgefräst. Das Abbrandmaß ist das Maß, um welches das Kernprofil beim Eckverschweißen verpresst wird und hierdurch in der Länge reduziert wird. Die Frästiefe entspricht bevorzugt maximal dem Maß von der Mantelschalenaußenfläche bis zum Befestigungsnutboden, insbesondere bis zu dessen äußerer Oberfläche. Bevorzugt entspricht die Frästiefe der Maximaldicke der Mantelschalen, s. Fig. 5a, 5b, 6
3. Verschweißen der Kernprofile zur Eckenbildung.

Es kann vorgesehen, sein, den Gehrungsschnitt und den Materialabtrag, z.B. durch einen Fräser in einem einzigen Bearbeitungsschritt mit einer Maschine durchzuführen.

Die unter Gehrung geschnittenen Stirnflächen der Kernprofile werden bis zum Aufschmelzen des Kunststoffes der Kernprofile erhitzt, z.B. durch einen Heizspiegel und aufeinandergepresst, wodurch sich diese stoffschlüssig verbinden. Geschmolzenes Kunststoffmaterial kann dabei aus dem Stirnflächenbereich der Kernprofile in Hohlkammern der Kernprofile und/oder in den Bereich zwischen Mantelschale und Befestigungsnutboden verpresst werden.

Beim Verpressen wandern die unter Gehrung abgetragenen, insbesondere gefrästen Stirnflächen der Mantelschalen 20, 20' bündig in der Ecke zusammen. Hierdurch wird das fertige Flügel-Rahmensystem mit den Vorzügen einer fugenfreien und dichten Eckschweißverbindung von Kunststoff bei gleichzeitiger Edeloptik und witterungsbeständiger Qualität einer Mantelschale, insbesondere aus Metall, mit einem automatisierten Fertigungsverfahren generiert.

Figur 6 stellt die Detailansicht einer Eckverbindung des erfindungsgemäßen Flügel-Rahmensystem von der Gebäudeaußenseite betrachtet dar. Im Folgenden sind die senkrecht verlaufenden Rahmen mit (') bezeichnet, die identische Querschnitte zu den waagerecht verlaufenden Profilen aufweisen.

In der Vorderansicht auf die Eckverbindung treffen auf der Gehrungslinie 90 die Blendrahmen 10, 10', die Anschlagdichtungen 14, 14', die Flügelrahmen 30, 30', sowie die Glasleistennuten 50, 50' zusammen und bilden eine perfekte Ecke.

Die Aluschalen sind immer so konzipiert, dass beim Zurückfräsen der Aluschalen die äußeren PVC-Funktionsstege im Befestigungsnutgrund nicht zerstört werden.

**Bezugszeichenliste**

| | |
|---|---|
| 100, 100' | Flügel-Rahmensystem |
| 900 | Setzpfostenprofil |
| 800 | Stulpprofil |
| | |
| a, b, H | Abstand |
| | |
| 1, 1', 2, 2' | Fräsbereiche |
| 1a, 1a', 2a, 2a' | Fräsebenen im Querschnitt |
| 10, 10' | Kernprofil für den Blendrahmen |
| 10a | Befestigungsnut in der Außenwand des Blendrahmenkernprofils |
| 11, 11" | Tragende Funktionsstege, Nutboden der Befestigungsnut |
| 12, 13, 12', 13' | Hinterschneidung in Befestigungsnutwand |
| 14, 14' | Anschlagdichtung |
| 15, 15' | Blendrahmenfuß |
| 16 | Glasleistennut |
| 17, 18, 17', 18' | Klebstoff |
| 19 | Dichtungsaufnahmenut |
| | |
| 20, 20' | Mantelschale |
| 21, 21', 22, 22' | Rastnase |
| 21a, 21'a, 22a | Raststege, Positioniersteg |
| 23, 23', 24, 24' | Klebefuß |
| 23a, 23'a, 24a, 24'a | Rastvorsprung |
| 27, 28, 27', 28' | Klebstoff |
| 29 | Beschichtung |
| | |
| 30, 30' | Kernprofil für Flügelrahmen |
| 30a | Befestigungsnut in der Außenwand des Flügelrahmenkernprofils |
| 31, 31" | Tragende Funktionsstege, Nutboden der Befestigungsnut |
| 32, 33, 32', 33' | Hinterschneidung in Befestigungsnutwand |
| 34 | Anschlagdichtung |
| 35, 36 | Glasdichtung |
| 37, 38, 37', 38' | Klebstoff |
| 38 | Glasleistennut |
| 39, 39' | Dichtungsaufnahmenut |
| 40, 40' | Mantelschale |
| 41, 42, 41', 42' | Rastnase |
| 43, 43', 44, 44' | Klebefuß |
| 45, 45' | Referenzsteg |
| 46, 46' | Verbindungselement |
| 46a | Keilnase |
| 46b | PVC-Weich (=Verbindungspartner/-gegenstück) |
| 47 | Zentrierstege |
| | |
| 50, 50' | Glasleiste |
| 60 | Glaseinsatz |
| 61 | Glasfalz |
| 70, 80 | Stahlverstärkung |
| 90 | Gehrungslinie |

## Patentansprüche

1. Rahmenprofil eines Blend- und/oder Flügelrahmens eines Fensters oder einer Tür umfassend ein Kernprofil (10,30) aus Kunststoff, wobei an wenigstens einer, bevorzugt an beiden der sich gegenüberliegenden Außenwände des Kernprofils (10,30) eine Mantelschale (20, 20', 40, 40') angeordnet ist, wobei wenigstens eine der Außenwände, bevorzugt beide, wenigstens eine in der Längsrichtung des Kernprofils (10,30) erstreckte Befestigungsnut (10a, 30a) aufweist, bevorzugt die über die gesamte Länge des Kernprofils (10, 30) erstreckt ist, durch welche die Außenwand im Bereich der Befestigungsnut (10a, 30a) nach innen in das Kernprofil (10,30) verlegt ist und deren Nutboden eine Höhe aufweist, die mindestens 50%, bevorzugt mindestens 70% der Gesamthöhe der Außenwand des Kernprofils (10, 30) beträgt, wobei die Mantelschale (20, 20', 40, 40') in der Befestigungsnut (10a, 30a) befestigt ist und die Befestigungsnut (10a, 30a) überdeckt, bevorzugt die gesamte Außenwand überdeckt und die Mantelschale (20, 20', 40, 40') auf ihrer zum Kernprofil (10, 30) weisenden Innenfläche ein Paar von in Höhenrichtung beabstandeten, zum Kernprofil (10, 30) ragende Befestigungselemente (21, 24) aufweist, mit denen die Mantelschale (20, 20', 40, 40') in der Befestigungsnut (10a, 30a) befestigt ist, **dadurch gekennzeichnet, dass**
a. zwischen dem Paar von Befestigungselementen (45, 46), mit denen eine nicht klebende Befestigung der Mantelschale (20, 20', 40, 40') erzielt ist, wenigstens ein weiteres Paar von in Höhenrichtung beabstandeten Klebefüssen (23, 24, 43, 44) angeordnet ist, oder
b. die Befestigungselemente des Paares jeweils als Klebefuss (24) ausgebildet sind durch einen Vorsprung mit zum Nutboden (11, 11", 31, 31 ") weisender Klebefläche zur Aufnahme von Klebstoff (17,18, 17', 18'), wobei die Klebefläche eine Hinterschneidung (12, 13, 12', 13') an der Befestigungsnutwand rastend hintergreift wodurch eine Befestigung der Mantelschale (20, 20, 40, 40') jeweils über eine mechanische Verbindung, und eine zusätzliche Klebeverbindung realisiert ist, durch die das Kernprofil (10,30) mit der Mantelschale (20, 20, 40, 40') schubfest/schubfedersteif kombiniert ist.

2. Rahmenprofil nach Anspruch 1, **dadurch gekennzeichnet, dass** der Nutboden (11, 11", 31, 31") der Befestigungsnut (10, 30) durch einen in Höhenrichtung verlaufenden Steg des Kernprofils (10,30), insbesondere eines das Kernprofil (10, 30) bildenden Hohlkammerprofils gebildet ist, der das Kernprofil (10, 30) nach außen begrenzt.

3. Rahmenprofil nach einem der vorherigen Ansprüche, **dadurch gekennzeichnet, dass** der den Nutboden (11, 11", 31, 31 ") bildende Steg (11, 11", 31, 31") ein überwiegend zur statischen Tragfähigkeit des Rahmenprofils beitragender Steg (11, 11", 31, 31") ist, insbesondere dadurch, dass er ein Steg (11, 11", 31, 31 ") mit der größten Dicke aller Stege des Kernprofils (10, 30) ist.

4. Rahmenprofil nach einem der vorherigen Ansprüche, **dadurch gekennzeichnet, dass** ein Befestigungselement (21, 24, 46, 47) ausgebildet ist als:
a. Raststeg (21), insbesondere zur rastenden Zusammenwirkung mit einer Hinterschneidung (12, 13, 12', 13') an der Befestigungsnutwand oder mit einer durch Materialverdrängung vom Raststeg an der Befestigungsnutwand selbst erzeugten Vertiefung, und/oder
b. Verbindungselement (46), insbesondere ausgebildet als ein in Richtung zum Befestigungsnutboden vorspringender Steg, vorzugsweise mit einen endseitigen Kopfstück, insbesondere mit einem keilförmigen oder zumindest gegenüber dem Steg verdickten Kopfstück, und welches zumindest bereichsweise an einen Verbindungspartner kontaktierend anlegbar und/oder in einen Verbindungspartner einbettbar ist, der an der Befestigungsnutwand befestigt, vorzugsweise daran anextrudiert ist, insbesondere der aus einem im Vergleich zum Material des Kernprofils und/oder der Mantelschale weicheren Material ausgebildet ist, vorzugsweise aus PVC-Weich, und/oder
c. Referenzsteg (45), vorzugsweise der die größte Dicke aller Befestigungselemente (46, 47) aufweist, insbesondere der anlegbar an einer der beiden Befestigungsnutwände, vorzugsweise mit einer zum Nutboden weisenden Anlaufschräge oder einem Anlaufbogen, ist, insbesondere wobei der Referenzsteg (45) zu einem anderen Befestigungselement, insbesondere einem Verbindungselement (46) gemäß Punkt c. im Abstand (b) angeordnet ist, und/oder
d. Positioniersteg/Raststeg (21, 22), insbesondere in Richtung zum Kernprofil (10, 30) sich verjüngender Positioniersteg, mit dem durch Kontaktierung mit der Befestigungsnutwand die Mantelschale (20, 20', 40, 40') zum Kernprofil (10, 30) ausrichtbar ist.

5. Rahmenprofil nach einem der vorherigen Ansprüche, **dadurch gekennzeichnet, dass** die Mantelschale (20, 20', 40, 40') an wenigstens einer der in Längsrichtung verlaufenden Kanten einen abgewinkelten Kragen aufweist, insbesondere L-förmig ausgebildet ist, bevorzugt, wobei der Kragen, bevorzugt die Stirnfläche des Kragens, an einer im Kernprofil eingesetzten Dichtung (14, 34, 36) kontaktierend anliegt.

6. Rahmenprofil nach einem der vorherigen Ansprüche, **dadurch gekennzeichnet, dass** eine Glasleiste (50) des einen Flügelrahmen bildenden Rahmenprofils aus dem Material der Mantelschale (20, 20', 40, 40') ausgebildet ist, insbesondere wobei die Außenfläche der Glasleiste (50) mit der Außenfläche der Mantelschale (20, 20', 40, 40') fluchtend, bevorzugt abstandslos fluchtend ausgerichtet ist.

7. Rahmenprofil nach einem der vorherigen Ansprüche, **dadurch gekennzeichnet, dass** die Mantelschale am Kernprofil des Blendrahmens und die Mantelschale am Kernprofil des Flügelrahmens, die auf derselben Seite, insbesondere Innenseite und/oder Außenseite der Profile angeordnet sind, mit ihren Sichtflächen fluchtend, insbesondere in derselben Ebene angeordnet sind.

8. Rahmenprofil nach einem der vorherigen Ansprüche, **dadurch gekennzeichnet, dass** die jeweilige Mantelschale (20, 20', 40, 40') einwandig ausgebildet ist, insbesondere keine Hohlkammern umfasst.

9. Verfahren zur Herstellung eines Rahmenprofils nach einem der vorherigen Ansprüche, **umfassend folgende Schritte:**
a. Extrudieren eines Kernprofils (10, 30) aus Kunststoff, insbesondere eines Hohlkammerprofils (10, 30) mit wenigstens einer Befestigungsnut (10a, 30a) in wenigstens einer der beiden sich gegenüberliegenden Außenwände des Kernprofils (10, 30), bevorzugt in jeder der beiden sich gegenüberliegenden Außenwände des Kernprofils (10, 30), durch welche die Außenwand im Bereich der Befestigungsnut (10a, 30a) nach innen in das Kernprofil (10,30) verlegt ist und deren Nutboden eine Höhe aufweist, die mindestens 50%, bevorzugt mindestens 70% der Gesamthöhe der Außenwand des Kernprofils (10, 30) beträgt, in einer vorbestimmten Länge, insbesondere von 6,5 Metern
b. Anfertigen von wenigstens einer, bevorzugt von zwei Mantelschalen (20, 20', 40, 40'), bevorzugt durch Strangpressen von Aluminium, mit Befestigungselementen (21, 24) auf der zum Kernprofil (10, 30) weisenden Innenflächen der Mantelschale (20, 20', 40, 40'), in einer vorbestimmten Länge, insbesondere von 6,5 Metern,
c. nicht klebendes Befestigen der wenigstens einen Mantelschale (20, 20', 40, 40') mit einem Paar von Befestigungselementen (21, 24) in der Befestigungsnut (10a, 30a) einer Außenwand des Kernprofils (10, 30) und klebendes Befestigen durch wenigstens ein weiteres Paar von in Höhenrichtung beabstandeten Klebefüssen zwischen dem Paar von Befestigungselementen (45, 46), mit denen die nicht klebende Befestigung erzielt ist, oder
d. klebendes Befestigen der wenigstens einen Mantelschale (20, 20', 40, 40') mit einem Paar von Befestigungselementen (21, 24) in der Befestigungsnut (10a, 30a) einer Außenwand des Kernprofils (10, 30), die jeweils als Klebefuss (24) ausgebildet sind durch einen Vorsprung mit zum Nutboden (11, 11", 31, 31") weisender Klebefläche zur Aufnahme von Klebstoff (17,18, 17', 18'), wobei die Klebefläche eine Hinterschneidung (12, 13, 12', 13') an der Befestigungsnutwand rastend hintergreift.

10. Verfahren nach Anspruch 9, **dadurch gekennzeichnet, dass** in die Befestigungsnut (10a, 30a) wenigstens ein sich in der Längsrichtung der Befestigungsnut (10a, 30a) erstreckender Klebemittelstrang (17, 17', 18, 18') eingebracht wird, vorzugsweise zwei, insbesondere parallele, Klebemittelstränge eingebracht werden, insbesondere während der Extrusion, und eine jeweilige Mantelschale (20, 20', 40, 40') mit wenigstens einem Befestigungselement, vorzugsweise mit zwei der Befestigungselemente (23, 24) durch das Klebemittel (17, 17', 18, 18') stoffschlüssig, insbesondere schubfest, mit dem Kernprofil (10, 30) verbunden wird.

11. Verfahren nach einem der vorherigen Ansprüche 9 oder 10, **dadurch gekennzeichnet, dass** während der Extrusion des Kernprofils (10, 30) aus Kunststoff, insbesondere PVC-hart, mit wenigstens einer, vorzugsweise zwei Befestigungsnuten (10a, 30a) in wenigstens einer der Befestigungsnute, vorzugsweise in beiden, an wenigstens eine der beiden Befestigungsnutwände zum Nutinneren weisend ein Verbindungspartner aus einem Material anextrudiert wird, das weicher ist als das Material des Kernprofils (10,30), insbesondere ein Verbindungspartner aus PVC-weich anextrudiert wird, und bei Befestigung einer Mantelschale wenigstens eines von deren Befestigungselementen, insbesondere durch im Verbindungspartner vom Befestigungselement erzeugte Materialverdrängung, an den Verbindungspartner kontaktierend angelegt und/oder in den Verbindungspartner eingebettet wird.

12. Verfahren nach einem der vorherigen Ansprüche 9 bis 11, **dadurch gekennzeichnet, dass** eine jeweilige Mantelschale (20, 20', 40, 40') parallel zum PVC-Kern ausgerichtet und mit wenigstens einem Teil ihrer Befestigungselemente (21) an der Nutwand der Befestigungsnut (10a, 30a) befestigt, insbesondere verrastet oder zumindest ausgerichtet wird.

## Claims

1. Frame profile of a blind frame and/or casement frame of a window or of a door, comprising a core profile (10, 30) made of plastic, wherein a casing shell (20, 20', 40, 40') is arranged on at least one, preferably on both, of the mutually opposite outer walls of the core profile (10, 30), wherein at least one of the outer walls, preferably both, has at least one fastening groove (10a, 30a) extending in the longitudinal direction of the core profile (10, 30), preferably which extends over the entire length of the core profile (10, 30), by means of which the outer wall is shifted inwardly into the core profile (10, 30) in the region of the fastening groove (10a, 30a) and whose groove bottom has a height which is at least 50%, preferably at least 70%, of the total height of the outer wall of the core profile (10, 30), wherein the casing shell (20, 20', 40, 40') is fastened in the fastening groove (10a, 30a) and covers the fastening groove (10a, 30a), preferably covers the entire outer wall, and the casing shell (20, 20', 40, 40') has on its inner surface, which faces towards the core profile (10, 30), a pair of fastening elements (21, 24) which are spaced apart in the vertical direction and project towards the core profile (10, 30) and by means of which the casing shell (20, 20', 40, 40') is fastened in the fastening groove (10a, 30a), **characterized in that**
a. between the pair of fastening elements (45, 46), by means of which a non-adhesive fastening of the casing shell (20, 20', 40, 40') is achieved, there is arranged at least one further pair of adhesive feet (23, 24, 43, 44) which are spaced apart in the vertical direction, or
b. the fastening elements of the pair are each formed as an adhesive foot (24) by means of a projection having an adhesive surface, which faces towards the groove bottom (11, 11'', 31, 31''), for receiving adhesive (17, 18, 17', 18'), wherein the adhesive surface latchingly engages behind an undercut (12, 13, 12', 13') on the fastening groove wall,
with the result that fastening of the casing shell (20, 20, 40, 40') is realized in each case via a mechanical connection and an additional adhesive connection by means of which the core profile (10, 30) is combined with the casing shell (20, 20 40, 40') with shear resistance/shear spring stiffness.

2. Frame profile according to Claim 1, **characterized in that** the groove bottom (11, 11", 31, 31'') of the fastening groove (10, 30) is formed by a web, which runs in the vertical direction, of the core profile (10, 30), in particular of a hollow-chamber profile which forms the core profile (10, 30) and which outwardly delimits the core profile (10, 30).

3. Frame profile according to either of the preceding claims, **characterized in that** the web (11, 11'', 31, 31'') forming the groove bottom (11, 11'', 31, 31'') is a web (11, 11'', 31, 31'') which predominantly contributes to the static load-bearing capacity of the frame profile, in particular **in that** it is a web (11, 11'', 31, 31'') having the greatest thickness of all the webs of the core profile (10, 30).

4. Frame profile according to at least one of the preceding claims, **characterized in that** a fastening element(21, 24, 46, 47) is designed as:
a. a latching web (21), in particular for latching interaction with an undercut (12, 13, 12', 13') on the fastening groove wall or with a depression produced by material displacement of the latching web on the fastening groove wall itself, and/or
b. a connecting element (46), in particular designed as a web which projects in the direction of the fastening groove bottom, preferably having an end-side head piece, in particular having a head piece which is wedge-shaped or at least thickened with respect to the web, and which can, at least in certain regions, be placed in contact against a connecting partner and/or can be embedded into a connecting partner which is fastened to the fastening groove wall, preferably extruded thereon, in particular which is formed from a material which is softer than the material of the core profile and/or of the casing shell, preferably consisting of soft PVC, and/or
c. a reference web (45), preferably which has the greatest thickness of all the fastening elements (46, 47), in particular which can be placed against one of the two fastening groove walls, preferably having a run-on slope or a run-on bend which faces towards the groove bottom, in particular wherein the reference web (45) is arranged at a distance (b) from another fastening element, in particular a connecting element (46) according to point c., and/or
d. a positioning web/latching web (21, 22), in particular a positioning web which tapers in the direction of the core profile (10, 30), with which, by making contact with the fastening groove wall, the casing shell (20, 20', 40, 40') can be oriented with respect to the core profile (10, 30).

5. Frame profile according to one of the preceding claims, **characterized in that** the casing shell (20, 20', 40, 40') has, on at least one of the edges running in the longitudinal direction, an angled-off collar, in particular is designed with an L shape, preferably wherein the collar, preferably the end face of the collar, bears in contact against a seal (14, 34, 36) inserted in the core profile.

6. Frame profile according to one of the preceding claims, **characterized in that** a glazing bead (50) of the frame profile forming a casement frame is formed from the material of the casing shell (20, 20', 40, 40'), in particular wherein the outer surface of the glazing bead (50) is oriented in alignment, preferably gaplessly in alignment, with the outer surface of the casing shell (20, 20', 40, 40').

7. Frame profile according to one of the preceding claims, **characterized in that** the casing shell on the core profile of the blind frame and the casing shell on the core profile of the casement frame, which are arranged on the same side, in particular the inner side and/or outer side of the profiles, are arranged with their visible surfaces in alignment, in particular in the same plane.

8. Frame profile according to one of the preceding claims, **characterized in that** the respective casing shell (20, 20', 40, 40') is of single-wall design, in particular comprises no hollow chambers.

9. Method for producing a frame profile according to one of the preceding claims, **comprising the following steps:**
a. extruding a core profile (10, 30) made of plastic, in particular a hollow-chamber profile (10, 30) having at least one fastening groove (10a, 30a) in at least one of the two mutually opposite outer walls of the core profile (10, 30), preferably in each of the two mutually opposite outer walls of the core profile (10, 30), by means of which the outer wall is shifted inwardly into the core profile (10, 30) in the region of the fastening groove (10a, 30a) and whose groove bottom has a height which is at least 50%, preferably at least 70%, of the total height of the outer wall of the core profile (10, 30), in a predetermined length, in particular of 6.5 meters,
b. producing at least one, preferably two, casing shells (20, 20', 40, 40'), preferably by extruding aluminium, having fastening elements (21, 24) on inner surfaces, which face towards the core profile (10, 30), of the casing shell (20, 20', 40, 40'), in a predetermined length, in particular of 6.5 meters,
c. non-adhesive fastening of the at least one casing shell (20, 20', 40, 40') with a pair of fastening elements (21, 24) in the fastening groove (10a, 30a) of an outer wall of the core profile (10, 30) and adhesive fastening by at least one further pair of adhesive feet, which are spaced apart in the vertical direction, between the pair of fastening elements (45, 46) by means of which the non-adhesive fastening is achieved, or
d. adhesive fastening of the at least one casing shell (20, 20', 40, 40') with a pair of fastening elements (21, 24) in the fastening groove (10a, 30a) of an outer wall of the core profile (10, 30), which are each formed as an adhesive foot (24) by means of a projection having an adhesive surface, which faces towards the groove bottom (11, 11'', 31, 31''), for receiving adhesive (17, 18, 17', 18'), wherein the adhesive surface latchingly engages behind an undercut (12, 13, 12', 13') on the fastening groove wall.

10. Method according to Claim 9, **characterized in that** at least one adhesive strand (17, 17', 18, 18') which extends in the longitudinal direction of the fastening groove (10a, 30a), preferably two, in particular parallel, adhesive strands, is/are introduced into the fastening groove (10a, 30a), in particular during extrusion, and a respective casing shell (20, 20', 40, 40') having at least one fastening element, preferably having two of the fastening elements (23, 24), is connected to the core profile (10, 30) in an integrally bonded manner by means of the adhesive (17, 17', 18, 18'), in particular in a shear-resistant manner.

11. Method according to either of the preceding Claims 9 and 10, **characterized in that,** during extrusion of the core profile (10, 30) made of plastic, in particular hard PVC, having at least one, preferably two, fastening grooves (10a, 30a), a connecting partner made of a material which is softer than the material of the core profile (10, 30), in particular a connecting partner made of soft PVC, is extruded, in at least one of the fastening grooves, preferably in both, onto at least one of the two fastening groove walls so as to face toward the groove interior, and, during fastening of a casing shell, at least one of its fastening elements is placed in contact against the connecting partner and/or embedded into the connecting partner, in particular by material displacement produced in the connecting partner by the fastening element.

12. Method according to one of the preceding Claims 9 to 11, **characterized in that** a respective casing shell (20, 20', 40, 40') is oriented parallel to the PVC core and, by way of at least a part of its fastening elements (21), is fastened, in particular latched or at least oriented, on the groove wall of the fastening groove (10a, 30a).

## Revendications

1. Profilé de cadre d'un cadre dormant et/ou de battant d'une fenêtre ou d'une porte, comprenant un profilé de noyau (10, 30) en matière plastique, une coque d'enveloppe (20, 20', 40, 40') étant agencée sur au moins une des, de préférence sur les deux parois extérieures opposées du profilé de noyau (10, 30), au moins une des parois extérieures, de préférence les deux, comprenant au moins une rainure de fixation (10a, 30a) étendue dans la direction longitudinale du profilé de noyau (10, 30), de préférence qui est étendue sur la longueur entière du profilé de noyau (10, 30), par laquelle la paroi extérieure est installée dans la zone de la rainure de fixation (10a, 30a) vers l'intérieur dans le profilé de noyau (10, 30), et dont le fond de rainure présente une hauteur qui est d'au moins 50 %, de préférence d'au moins 70 %, de la hauteur totale de la paroi extérieure du profilé de noyau (10, 30), la coque d'enveloppe (20, 20', 40, 40') étant fixée dans la rainure de fixation (10a, 30a) et recouvrant la rainure de fixation (10a, 30a), de préférence recouvrant la paroi extérieure entière, et la coque d'enveloppe (20, 20', 40, 40') comprenant sur sa surface intérieure orientée vers le profilé de noyau (10, 30) une paire d'éléments de fixation (21, 24) espacés dans la direction verticale, faisant saillie vers le profilé de noyau (10, 30), avec lesquels la coque d'enveloppe (20, 20', 40, 40') est fixée dans la rainure de fixation (10a, 30a), **caractérisé en ce que**
a. au moins une paire supplémentaire de pieds adhésifs (23, 24, 43, 44) espacés dans la direction verticale est agencée entre la paire d'éléments de fixation (45, 46), avec lesquels une fixation non adhésive de la coque d'enveloppe (20, 20', 40, 40') est obtenue, ou
b. les éléments de fixation de la paire sont chacun configurés en tant que pied adhésif (24) par une protubérance munie d'une surface adhésive orientée vers le fond de rainure (11, 11'', 31, 31'') pour la réception d'adhésif (17, 18, 17', 18'), la surface adhésive s'engageant par encliquetage derrière une contre-dépouille (12, 13, 12', 13') sur la paroi de rainure de fixation,
une fixation de la coque d'enveloppe (20, 20, 40, 40') étant ainsi réalisée à chaque fois par l'intermédiaire d'une liaison mécanique et d'une liaison adhésive supplémentaire, par laquelle le profilé de noyau (10, 30) est combiné à la coque d'enveloppe (20, 20, 40, 40') de manière résistante au cisaillement/rigide au cisaillement.

2. Profilé de cadre selon la revendication 1, **caractérisé en ce que** le fond de rainure (11, 11'', 31, 31'') de la rainure de fixation (10, 30) est formé par une entretoise du profilé de noyau (10, 30) s'étendant en direction verticale, notamment d'un profilé à chambre creuse formant le profilé de noyau (10, 30), qui délimite le profilé de noyau (10, 30) vers l'extérieur.

3. Profilé de cadre selon l'une quelconque des revendications précédentes, **caractérisé en ce que** l'entretoise (11, 11'', 31, 31'') formant le fond de rainure (11, 11'', 31, 31'') est une entretoise (11, 11'', 31, 31'') contribuant de manière prépondérante à la capacité de charge statique du profilé de cadre, notamment **en ce qu'**il s'agit d'une entretoise (11, 11'', 31, 31'') ayant la plus grande épaisseur parmi toutes les entretoises du profilé de noyau (10, 30).

4. Profilé de cadre selon l'une quelconque des revendications précédentes, **caractérisé en ce qu'**un élément de fixation (21, 24, 46, 47) est configuré en tant que :
a. entretoise d'encliquetage (21), notamment pour la coopération par encliquetage avec une contre-dépouille (12, 13, 12', 13') sur la paroi de rainure de fixation ou avec un creux produit par déplacement de matériau par l'entretoise d'encliquetage elle-même sur la paroi de rainure de fixation, et/ou
b. élément de liaison (46), notamment configuré en tant qu'une entretoise faisant saillie en direction du fond de rainure de fixation, de préférence muni d'une pièce de tête d'extrémité, notamment muni d'une pièce de tête en forme de coin ou au moins épaissie par rapport à l'entretoise, et qui, au moins en zones, peut être mis en contact avec un partenaire de liaison et/ou peut être encastré dans un partenaire de liaison, qui est fixé à la paroi de rainure de fixation, de préférence extrudé sur celle-ci, notamment qui est formé d'un matériau plus souple en comparaison du matériau du profilé de noyau et/ou de la coque d'enveloppe, de préférence en PVC souple, et/ou
c. entretoise de référence (45), de préférence celle qui présente la plus grande épaisseur parmi tous les éléments de fixation (46, 47), notamment qui peut être placée sur une des deux parois de rainure de fixation, de préférence avec un biais d'attaque ou un coude d'attaque orienté vers le fond de rainure, l'entretoise de référence (45) étant notamment agencée à une distance (b) d'un autre élément de fixation, notamment d'un élément de liaison (46) selon le point c., et/ou
d. entretoise de positionnement/entretoise d'encliquetage (21, 22), notamment entretoise de positionnement qui se rétrécit en direction du profilé de noyau (10, 30), avec laquelle la coque d'enveloppe (20, 20', 40, 40') peut être alignée avec le profilé de noyau (10, 30) par contact avec la paroi de rainure de fixation.

5. Profilé de cadre selon l'une quelconque des revendications précédentes, **caractérisé en ce que** la coque d'enveloppe (20, 20', 40, 40') présente sur au moins un des bords s'étendant dans la direction longitudinale un collet coudé, notamment configuré en forme de L, le collet, de préférence la surface frontale du collet, reposant de préférence en contact sur un joint d'étanchéité (14, 34, 36) inséré dans le profilé de noyau.

6. Profilé de cadre selon l'une quelconque des revendications précédentes, **caractérisé en ce qu'**une baguette de verre (50) du profilé de cadre formant un cadre de battant est formée à partir du matériau de la coque d'enveloppe (20, 20', 40, 40'), la surface extérieure de la baguette de verre (50) étant notamment alignée avec la surface extérieure de la coque d'enveloppe (20, 20', 40, 40'), de préférence alignée sans espacement.

7. Profilé de cadre selon l'une quelconque des revendications précédentes, **caractérisé en ce que** la coque d'enveloppe sur le profilé de noyau du cadre dormant et la coque d'enveloppe sur le profilé de noyau du cadre de battant, qui sont agencées sur le même côté, notamment le côté intérieur et/ou le côté extérieur des profilés, sont agencées avec leurs surfaces visibles alignées, notamment dans le même plan.

8. Profilé de cadre selon l'une quelconque des revendications précédentes, **caractérisé en ce que** la coque d'enveloppe respective (20, 20', 40, 40') est configurée à simple paroi, notamment ne comprend pas de chambres creuses.

9. Procédé de fabrication d'un profilé de cadre selon l'une quelconque des revendications précédentes, **comprenant les étapes suivantes :**
a. l'extrusion d'un profilé de noyau (10, 30) à partir de matière plastique, notamment d'un profilé à chambre creuse (10, 30) muni d'au moins une rainure de fixation (10a, 30a) dans au moins une des deux parois extérieures opposées du profilé de noyau (10, 30), de préférence dans chacune des deux parois extérieures opposées du profilé de noyau (10, 30), par laquelle la paroi extérieure est installée dans la zone de la rainure de fixation (10a, 30a) vers l'intérieur dans le profilé de noyau (10, 30), et dont le fond de rainure présente une hauteur qui est d'au moins 50 %, de préférence d'au moins 70 %, de la hauteur totale de la paroi extérieure du profilé de noyau (10, 30), en une longueur prédéterminée, notamment de 6,5 mètres,
b. la fabrication d'au moins une, de préférence de deux coques d'enveloppe (20, 20', 40, 40'), de préférence par extrusion d'aluminium, avec des éléments de fixation (21, 24) sur les surfaces intérieures de la coque d'enveloppe (20, 20', 40, 40') orientées vers le profilé de noyau (10, 30), en une longueur prédéterminée, notamment de 6,5 mètres,
c. la fixation non adhésive de l'au moins une coque d'enveloppe (20, 20', 40, 40') avec une paire d'éléments de fixation (21, 24) dans la rainure de fixation (10a, 30a) d'une paroi extérieure du profilé de noyau (10, 30) et la fixation adhésive par au moins une paire supplémentaire de pieds adhésifs espacés dans la direction verticale entre la paire d'éléments de fixation (45, 46), au moyen desquels la fixation non adhésive est obtenue, ou
d. la fixation adhésive de l'au moins une coque d'enveloppe (20, 20', 40, 40') avec une paire d'éléments de fixation (21, 24) dans la rainure de fixation (10a, 30a) d'une paroi extérieure du profilé de noyau (10, 30), qui sont chacun configurés en tant que pied adhésif (24) par une protubérance munie d'une surface adhésive orientée vers le fond de rainure (11, 11'', 31, 31'') pour la réception d'adhésif (17, 18, 17', 18'), la surface adhésive s'engageant par encliquetage derrière une contre-dépouille (12, 13, 12', 13') sur la paroi de rainure de fixation.

10. Procédé selon la revendication 9, **caractérisé en ce qu'**au moins un cordon d'agent adhésif (17, 17', 18, 18') s'étendant dans la direction longitudinale de la rainure de fixation (10a, 30a) est introduit dans la rainure de fixation (10a, 30a), de préférence deux cordons d'agent adhésif, notamment parallèles, sont introduits, notamment pendant l'extrusion, et une coque d'enveloppe respective (20, 20', 40, 40') munie d'au moins un élément de fixation, de préférence munie de deux des éléments de fixation (23, 24), est reliée au profilé de noyau (10, 30) par l'agent adhésif (17, 17', 18, 18') par accouplement de matière, notamment de manière résistante au cisaillement.

11. Procédé selon l'une quelconque des revendications 9 ou 10 précédentes, **caractérisé en ce que,** pendant l'extrusion du profilé de noyau (10, 30) à partir de matière plastique, notamment de PVC dur, avec au moins une, de préférence deux rainures de fixation (10a, 30a), dans au moins une des rainures de fixation, de préférence dans les deux, un partenaire de liaison en un matériau qui est plus souple que le matériau du profilé de noyau (10, 30) est extrudé sur au moins une des deux parois de rainure de fixation orientée vers l'intérieur de la rainure, notamment un partenaire de liaison en PVC souple est extrudé, et lors de la fixation d'une coque d'enveloppe, au moins un de ses éléments de fixation est mis en contact sur le partenaire de liaison et/ou encastré dans le partenaire de liaison, notamment par un déplacement de matière produit dans le partenaire de liaison par l'élément de fixation.

12. Procédé selon l'une quelconque des revendications 9 à 11 précédentes, **caractérisé en ce qu'**une coque d'enveloppe respective (20, 20', 40, 40') est alignée parallèlement au noyau en PVC et fixée, notamment encliquetée ou au moins alignée, à la paroi de rainure de la rainure de fixation (10a, 30a) avec au moins une partie de ses éléments de fixation (21).
